# EUROPEAN PATENT SPECIFICATION

(11) **EP 3 595 865 B1**
(45) Date of publication and mention of the grant of the patent: **29.09.2021**
(21) Application number: 17809207.8
(22) Date of filing: 15.11.2017
(51) Int. Cl.: B29C 64/106, B29C 64/209

(54) **HANDHELD 3D BIOPRINTER**
TRAGBARER 3D-BIODRUCKER
BIO-IMPRIMANTE 3D PORTABLE

(30) Priority: 15.03.2017 AU 2017900906
(43) Date of publication of application: 22.01.2020
(73) Proprietor: SMR Patents S.à.r.l., 1653 Luxembourg (LU)
(72) Inventor: THORPE, Dylan, 5160 Lonsdale (AU); BELCHER, Simon, South Plympton, South Australia 5038 (AU); NICHOLSON, James, Belair, South Australia 5052 (AU)
(74) Representative: Weber-Bruls, Dorothée
(86) International application number: PCT/EP2017/079283
(87) International publication number: WO 2018/166641

(56) References cited:
- WO-A1-2008/103296
- WO-A1-2015/107333
- CN-U- 204 054 677
- US-A- 5 596 025
- US-A1- 2016 361 867

## Description

### TECHNICAL FIELD

The present disclosure relates to additive manufacturing of biocompatible materials. In a particular form the present disclosure relates to a handheld 3 dimensional (3D) printing of biocompatible materials for surgical biofabrication.

### BACKGROUND

Laboratory studies and prototypes have established the technical feasibility of a handheld 3D printer for surgical biofabrication. In one recent (although not necessarily well known) prototype system UV curable inks containing stem cells and biomaterials are in-situ printed and UV cured to allow a surgeon to biofabricate a tissue structure, for example to directly repair damaged cartilage. In this prototype system two reagent containers separately store the stem cells and biomaterial as hydrogels and a mechanical extrusion system is used to extrude the reagents through 3D printed titanium extruder nozzle, and a UV light source is used to cross-link the hydrogels immediately after extrusion to form a stable structure that encapsulates and supports the stem cells. A foot pedal is used to control reagent extrusion and the rate of extrusion is controlled using an electronic control interface. Each extruder has a circular cross section and is deposited co-axially with a core material containing the stem cells and a shell material which encapsulates and supports the core material

However whilst technical feasibility has been established with the above discussed prototype, this prototype has a number of disadvantages, particular to enable cost effective production and reliable use. For example the prototype device suffers from reliability and consistency issues. The viscosity and thus flow rate of the reagents are sensitive to temperature and the material properties are sensitive to the mixing ratio. This then requires tight control of the extrusion rates. Additionally the prototype device has limited freedom of movement as it is connected by cables to a foot pedal and an electronic control interface. Further the nozzle is a 3D printed titanium nozzle which is expensive and unsuitable for volume manufacturing. WO 2008/103296 A1 discloses a process for repairing a spinal joint by injecting a polymerizable composition into the disk and corresponding delivery devices. WO2015107333 discloses a 3D printer comprising an x-y-z gantry robot including a material delivery system.

There is thus a need to provide an improved handheld 3D printing device, or at least an alternative to existing handheld 3D printing device.

### SUMMARY

According to the present invention, there is provided a handheld 3D printing apparatus for extruding multiple reagent compositions, the apparatus comprising:
a housing comprising:
   a first reagent container support arrangement which in use receives and supports a first reagent container containing a stem cell supporting reagent;
   a second reagent container support arrangement which in use receives and supports a second reagent container containing a light curable reagent;
   a power supply;
   an electric drive train arrangement configured to drive a first reagent piston into a distal end of the first reagent container, and to drive a second reagent piston into a distal end of the second reagent container;
   an electronic control circuit to control the electric drive train to control extrusion of the reagents from the first and second reagent containers;
a nozzle connected at a distal end to the housing and comprising a co-extrusion tip comprising at least one aperture, and a first conduit for receiving the first reagent driven out of a proximal end of the first reagent container and directing the first reagent out of the at least one aperture in the tip, and a second conduit for receiving the second reagent driven out of a proximal end of the second reagent container and directing the second reagent out of the at least one aperture in the tip.

The extruded material can be cured using an external light source. Alternatively the handheld 3D printing apparatus may further comprise a light source mounted on or in the nozzle and controlled by the electronic control circuit for curing the reagents either just prior or after extrusion from the tip. These and other features will now be described.

In a further aspect of the present invention, there is provided the use of the according to any of claims 1-15 handheld 3D printing apparatus for extruding radiation curable reagent compositions. The radiation curable reagent composition may additionally be cured by using the handheld 3D printing apparatus.

### BRIEF DESCRIPTION OF DRAWINGS

Embodiments of the present disclosure will be discussed with reference to the accompanying drawings wherein:
Figure 1A is an isometric view of a handheld 3D printing apparatus according to an embodiment;
Figure 1B is an exploded isometric view of the handheld 3D printing apparatus of Figure 1A;
Figure 1C is an exploded top view of the handheld 3D printing apparatus of Figure 1A;
Figure 1D is an exploded side view of the handheld 3D printing apparatus of Figure 1A;
Figure 1E is an exploded end view of the handheld 3D printing apparatus of Figure 1A;
Figure 2A is an isometric view of a nozzle of a handheld 3D printing apparatus according to an embodiment;
Figure 2B is an top view of the handheld 3D printing apparatus of Figure 2A;
Figure 2C is side view of the handheld 3D printing apparatus of Figure 2A;
Figure 2D is an end view of the handheld 3D printing apparatus of Figure 2A;
Figure 2E is a sectional view through section AA of Figure 2C prior to insertion of the core tube;
Figure 2F is a sectional detail view through feature F of Figure 2E;
Figure 2G is a another sectional view through section AA of Figure 2C in final form after sealing and insertion of the core tube;
Figure 2H is a sectional detail view through feature H of Figure 2G;
Figure 3A is an isometric view of a handgrip portion of a handheld 3D printing apparatus according to an embodiment;
Figure 3B is an isometric view of a first reagent container according to an embodiment;
Figure 3C is an isometric view of a second reagent container according to an embodiment;
Figure 4A is an isometric view of an upper section of a rear housing of a handheld 3D printing apparatus according to an embodiment;
Figure 4B is an isometric view of a lower section of a rear housing of a handheld 3D printing apparatus according to an embodiment;
Figure 5A is an isometric view of a drive train arrangement according to an embodiment;
Figure 5B is an exploded isometric view of the drive train arrangement of Figure 5A;
Figure 5C is an isometric view of a jack screw in the drive train arrangement of Figure 5A;
Figure 5D is an isometric view of a jack spur gear in the drive train arrangement of Figure 5A;
Figure 5E is an isometric view of a stepper motor in the drive train arrangement of Figure 5A;
Figure 5F is an isometric view of a drive cap in the drive train arrangement of Figure 5A;
Figure 5G is an isometric view of a drive cradle in the drive train arrangement of Figure 5A;
Figure 5H is an top view of the drive cradle in the drive train arrangement of Figure 5A;
Figure 5I is an end view of the drive cradle in the drive train arrangement of Figure 5A;
Figure 6A is an isometric view of a nozzle of a handheld 3D printing apparatus according to another embodiment;
Figure 6B is an isometric view of a nozzle of a handheld 3D printing apparatus according to another embodiment;
Figure 6C is an end view of the nozzle of Figure 6B;
Figure 6D is a sectional view through section DD of Figure 6C;
Figure 6E is an isometric view of a nozzle of a handheld 3D printing apparatus according to another embodiment;
Figure 6F is an end view of the nozzle of Figure 6B;
Figure 6G is a sectional view through section GG of Figure 6F;
Figure 7A is an isometric view of a two part extruder tip according to an embodiment;
Figure 7B is an exploded view of the two part extruder tip of Figure 7A;
Figure 7C is an isometric view of the tip cap of the two part extruder tip of Figure 7A;
Figure 7D is a side view of the two part extruder tip of Figure 7A;
Figure 7E is a front view of the two part extruder tip of Figure 7A;
Figure 7F is a sectional view along section HH of Figure 7E;
Figure 8 is an exploded view of a side loading embodiment;
Figure 9A is an isometric view of a back loading embodiment;
Figure 9B is another isometric view of the back loading embodiment of Figure 9A;
Figure 10 is an isometric view of an embodiment with a pistol grip;
Figure 11A shows a section of knee cartilage with a damaged section according to an embodiment;
Figure 11B shows the knee cartilage with the damaged section excised;
Figure 11C shows an embodiment of the biopen printing a biomaterial into the excised section to repair the knee cartilage.
Figure 12A shows a first isometric view of an embodiment with a rear hinge;
Figure 12B shows a second isometric view the embodiment shown in Figure 12A
Figure 12C is an exploded view of the embodiment shown in Figure 12A;
Figure 12D is a top view of the embodiment shown in Figure 12A with the upper housing removed;
Figure 12E is a side view of the embodiment shown in Figure 12A;
Figure 12F is a bottom view of the embodiment shown in Figure 12A;
Figure 12G is a front view of the embodiment shown in Figure 12A;
Figure 12H is a sectional view through section SS of Figure 12D;
Figure 12I is a side view of the embodiment shown in Figure 12A with the top cover open;
Figure 12J is a bottom view of the embodiment shown in Figure 12A with the lower housing removed;
Figure 12K is a sectional view through section YY of Figure 12D;
Figure 12L is a sectional view through section ZZ of Figure 12D;
Figure 12M is a schematic view of the user interface of the embodiment shown in Figure 12A
Figure 13A is a side view of the nozzle assembly in the embodiment shown in Figure 12A;
Figure 13B is another side view of the nozzle assembly in the embodiment shown in Figure 12A;
Figure 13C is an end view of the nozzle assembly in the embodiment shown in Figure 12A;
Figure 13D is an isometric view of the nozzle assembly in the embodiment shown in Figure 12A;
Figure 13E is a top view of the nozzle assembly in the embodiment shown in Figure 12A, and Figure 13F is an section view of the nozzle assembly through section AA of Figure 13E;
Figure 14A is a first isometric view of triple barrel concentric syringe assembly according to an embodiment;
Figure 14B is a second isometric view of the triple barrel concentric syringe assembly of Figure 14A;
Figure 14C is an exploded view of the triple barrel concentric syringe assembly of Figure 14A;
Figure 14D is a top view of the triple barrel syringe concentric assembly of Figure 14A;
Figure 14E is a section view through section AA of Figure 14D;
Figure 14F is a side view of the triple barrel syringe concentric assembly of Figure 14A;
Figure 14G is a section view through section BB of Figure 14G;
Figure 14H is a front view of the triple barrel syringe assembly of Figure 14A;
Figure 14I is a rear view of the triple barrel syringe assembly of Figure 14A;
Figure 14J is a close up of the nozzle assembly of Figure 14E; and
Figure 14K is a close up of the nozzle assembly of Figure 14G.

In the following description, like reference characters designate like or corresponding parts throughout the figures.

### DESCRIPTION OF EMBODIMENTS

According to a general embodiment of the present invention, the handheld 3D printing apparatus has a nozzle connected at a distal end to the housing and comprising a co-extrusion tip comprising at least one aperture, and a first conduit for receiving the first reagent driven out of a proximal end of the first reagent container and directing the first reagent out of the at least one aperture in the tip, and a second conduit for receiving the second reagent driven out of a proximal end of the second reagent container and directing the second reagent out of the at least one aperture in the tip. This means, that the two reagents are contacted, for example mixed, prior to being extruded from the nozzle tip.

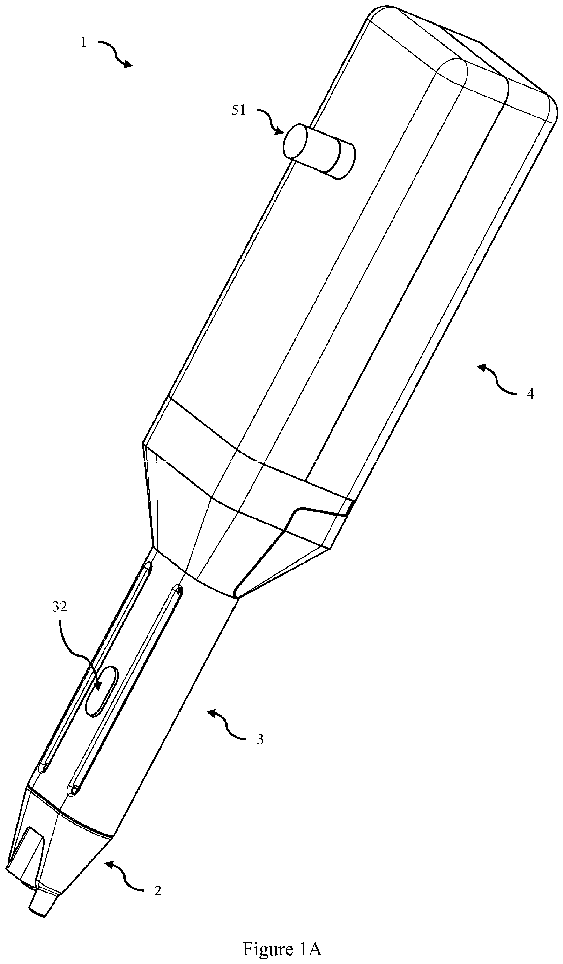

In one embodiment, the handheld 3D printing apparatus has a nozzle comprising a core aperture and an annular aperture in a coaxial arrangement, and a first conduit for receiving the first reagent driven out of a proximal end of the first reagent container and directing the first reagent out of the core aperture in the tip, and a second conduit for receiving the second reagent driven out of a proximal end of the second reagent container (9) and directing the second reagent out of the annular aperture in the tip. Referring to Figure 1A, there is shown an embodiment of a handheld 3D printing apparatus for extruding and curing radiation curable reagent compositions which will be referred to as a biopen. The handheld 3D printing apparatus 1 or biopen comprises a nozzle 2 and a housing. The nozzle defines the proximal end and the housing defines the distal end. In the embodiment shown in Figure 1A, the housing is formed from a handgrip 3 and a rear housing 4. A start/stop (i.e. on/off) button 32 is provided on the handgrip and in this embodiment the user interface 51 comprises a speed control knob. However in some embodiments the speed could be fixed in which case the speed control knob is omitted.

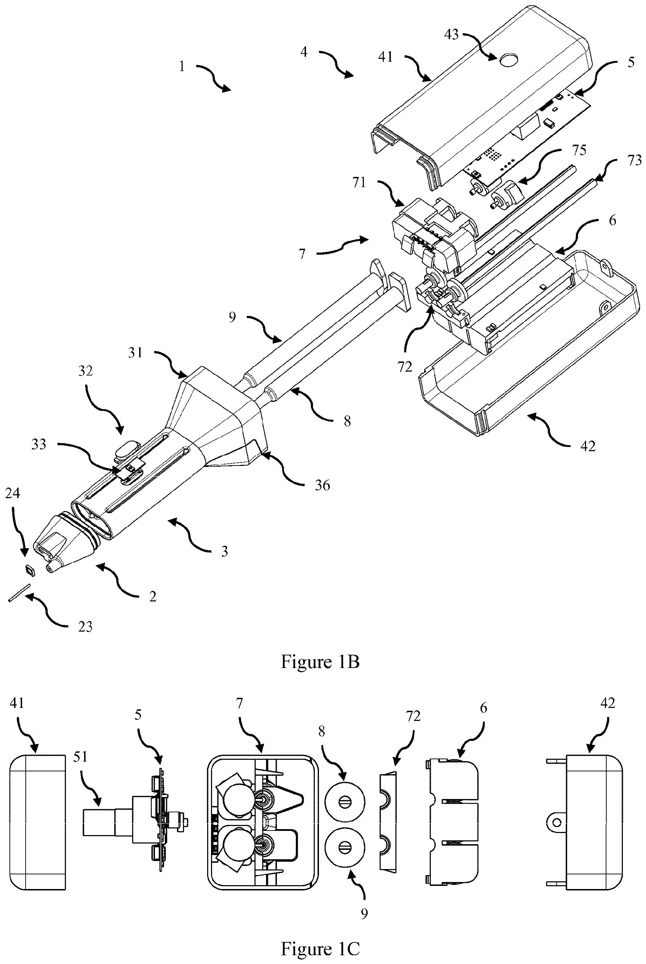

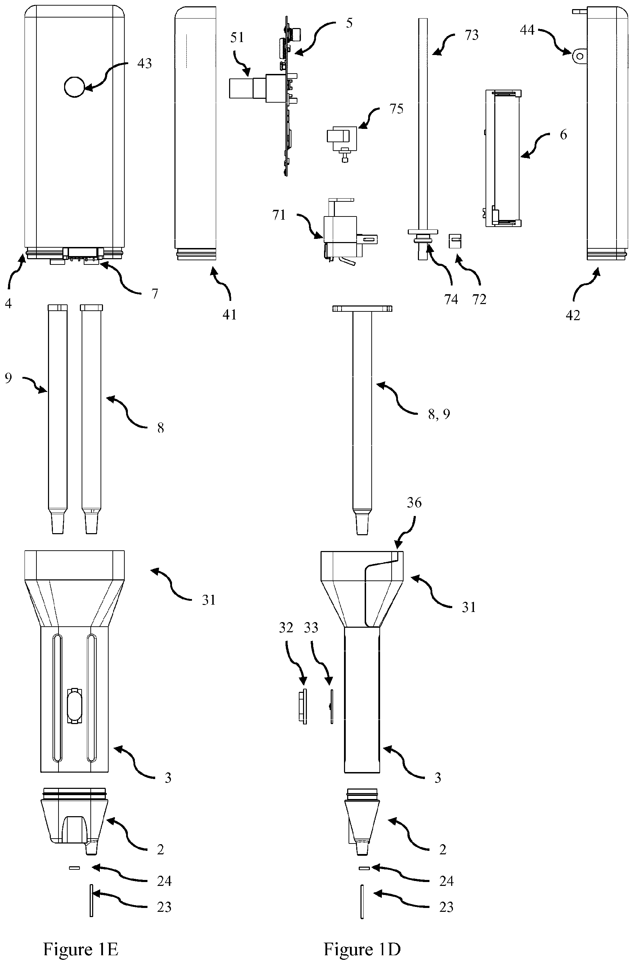

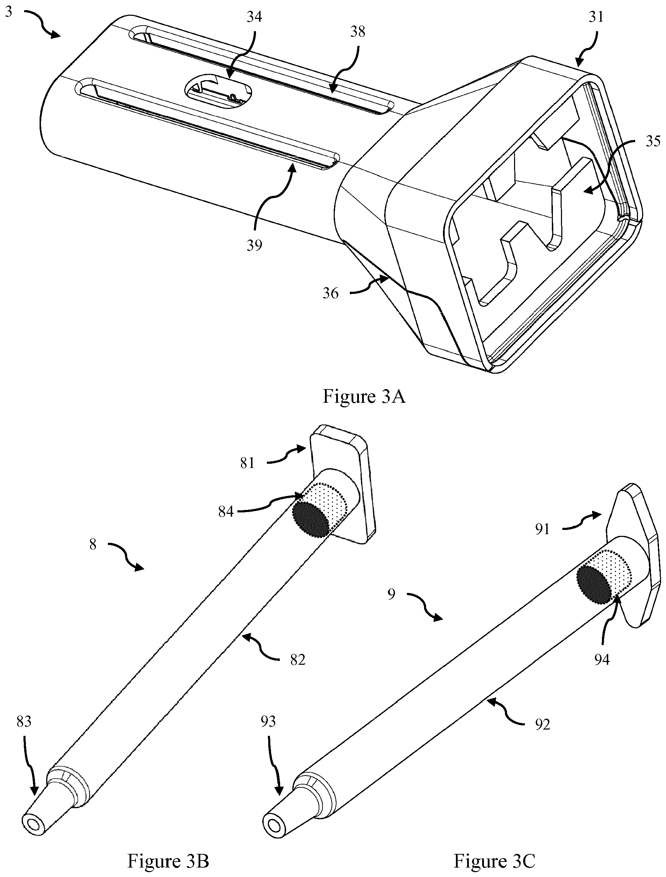

Figure 1B is an exploded isometric view of the handheld 3D printing apparatus of Figure 1A, and Figure 1C, 1D and 1E are exploded top, side and end views. As will be explained in more detail below, the handheld 3D printing apparatus or biopen comprises a first reagent container support arrangement 35 (cf. Figure 3A) which in use receives and supports a first reagent container 8 containing a first stem cell supporting reagent. The handheld 3D printing apparatus or biopen also comprises a second reagent container support arrangement 35 (cf. Figure 3A). which in use receives and supports a second reagent container 9 containing a light curable reagent. In this embodiment these are located in the handgrip. In this embodiment the apparatus is approximately 175mm in length and the rear housing is approximately square with 30mm sides, and weight is less than 100 grams allowing it to be easily held and operated in a single hand. Other sizes and weights of the apparatus are encompassed by the present invention. In one embodiment the apparatus is specifically designed for a right hander, whereas in another embodiment the apparatus is specifically designed for a left hander. Alternatively the apparatus can be designed as ambidextrous.

The rear housing 4 comes in a an upper section 41 and a lower section 42 and houses a power supply 6, such as alkaline, lithium ion or other batteries (e.g. 3 AAA alkaline batteries or any other number of batteries), an electric drive train arrangement 7 which is configured to drive a first reagent piston 84 into a distal end 81 of the first reagent container 8, and to drive a second reagent piston 94 into a distal end 91 of the second reagent container 9. An electronic control circuit 5 is used to control the electric drive train 7 to control extrusion of the reagents from the first and second reagent containers 8 and 9.

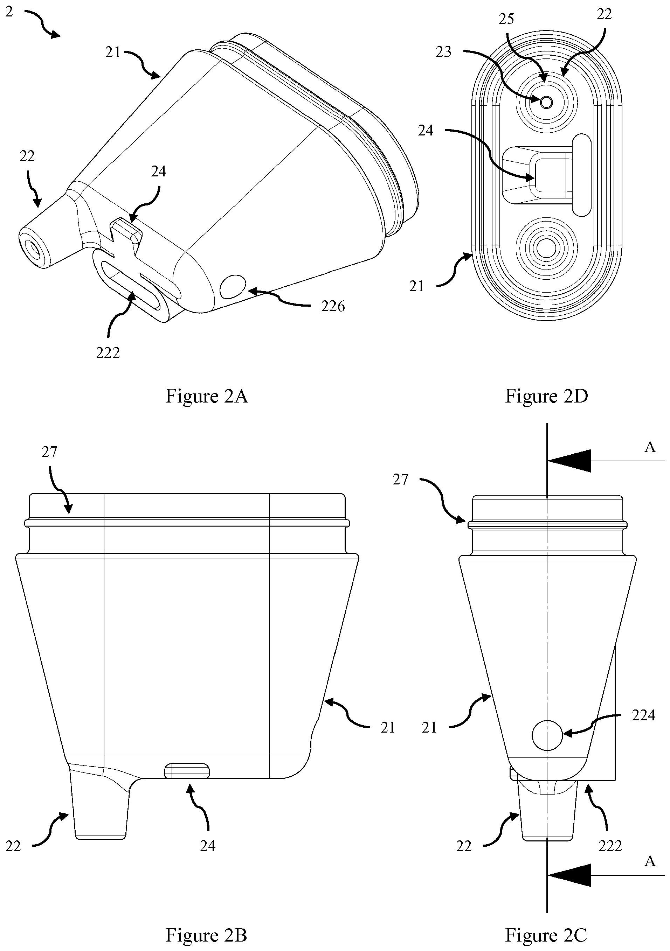

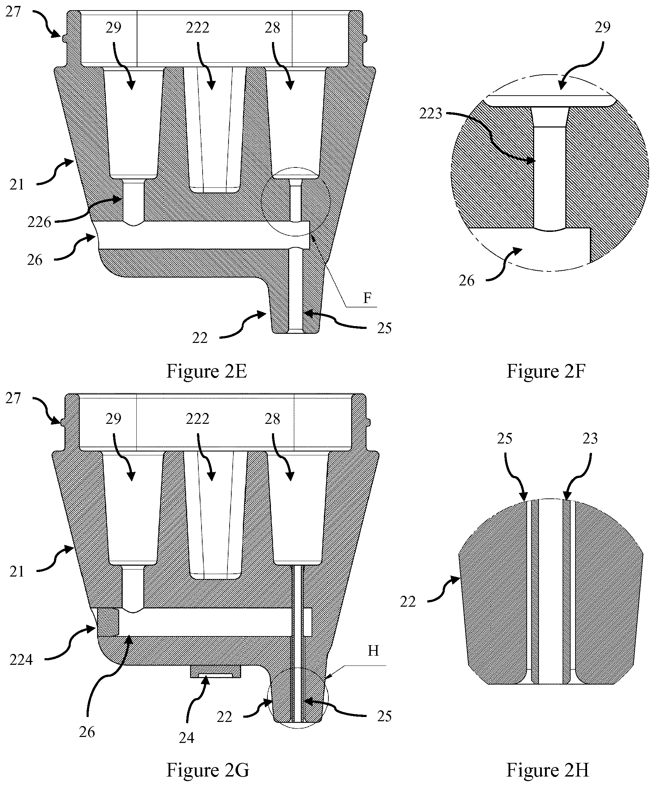

An embodiment of the nozzle 2 is shown in Figures 2A to 2H. Figures 2A, 2B, 2C and 2D are isometric top, side and end views respectively. The nozzle 2 comprises a manifold housing 21 with the distal end comprising a retention rib to allow connection of the nozzle to the distal end to the housing/hand grip 3. At the proximal end the nozzle comprises a coextrusion tip 22 with a core aperture 23 and an annular aperture 25 in a coaxial arrangement. In this embodiment, a light source 24 is mounted on or in the nozzle and controlled by the electronic control circuit 5 for curing the reagents either just prior or after extrusion from the tip 22. In the embodiment shown in Figures 2A to 2D and 2G the light source 24 is a UV LED mounted on the proximal end of the nozzle to irradiate the reagents after they are extruded from the tip. In one embodiment the light source further comprises a lens and focuses the light in a zone at the end of the tip, for example 1-3mm from the tip, 1-5mm, 1-10mm or the like. Other light sources suitable for curing the reagents may be possible. A conduit 222 is provided for the LED cable. In this embodiment the LED 24 is located on the lower side of the nozzle (i.e. opposite side to on/off button 33) and the conduit 222 is provided on the upper side. This ensures that UV light is directed downward and that the conduit 222 and nozzle 2 partially shields or blocks emission back towards the user. In other embodiments, further guards may be used to minimise or control the direction of emission to reduce unwanted exposure to the patient or operator. The UV light source may generate radiation in the wavelength from 100-420 nm, such as 200-420 nm or 300-420 nm. In one embodiment the wavelength is 350-420 nm. The light source could be a UV LED or UV laser diode, along with focusing optics (lenses, etc) and guards or shields to block and control the emission direction. In other embodiments the device could be used with different materials with different curing wavelengths (not necessarily UV wavelengths), in which case the light source would be selected to match the curing wavelength. In other embodiments the light source could be omitted from the apparatus, and extruded material can be cured using a separate remote or external light source and external light guides. Such external light source may be selected from the group of light sources mentioned above.

The nozzle 2 comprises a manifold housing 21 which comprises a first conduit that receives the first reagent driven out of the proximal end of the first reagent container 8 and directs the first reagent out of the core aperture 23 in the tip 22. A second conduit 26 receives the second reagent driven out of a proximal end of the second reagent container 9 and directs the second reagent out of the annular aperture 25 in the tip 22. The reagents are thus extruded as a coaxial bead of material with the first reagent forming the core material and the second reagent forming a shell material which surrounds, protects and supports the core material. The first or core reagent material may comprise stem cells and support media in a hydrogel or paste. The second or shell reagent material will typically have a different composition in line with providing a protecting and structural support role for the core material, and may or may-not comprise stem cells. The second reagent material may be provided as a hydrogel or paste. The hydrogels may be comprised of a hyaluronic acid, methacrylic anhydride, agarose, methylcellulose, gelatine or the like.

The nozzle in this embodiment is suitable for manufacture using plastic injection moulding and the internal structure of an embodiment of the nozzle is shown in more detail in Figures 2E to 2H. Figure 2E is a sectional view through section AA of Figure 2C of the nozzle after moulding and prior to insertion of the a core tube 23 and manifold plug 224, and Figure 2G is another sectional view through section AA of Figure 2C in the final form after insertion of the core tube and manifold plug. The configuration of the coaxial tip 22 is further illustrated in Figure 2F which is a sectional view through feature F of Figure 2E and Figure 2H which is a sectional view through feature H of Figure 2G.

As shown in the embodiment of Figure 2E, the manifold housing 21 comprises a first cavity 28 for receiving the proximal end 83 of the first or core reagent container 8, and a second cavity 29 for receiving the proximal end 93 of the second or shell reagent container 9. A first conduit 223, shown in more detail in Figure 2F extends from the first cavity 28 to the manifold 26 and a second conduit 226 extends from the second cavity 29 to the manifold 26. A first or shield tube 25 extends from the manifold 26 to the tip 22, and is a larger diameter than the first conduit 223. As can be seen in Figures 2E and 2G the manifold 26 is initially open to the outer wall of the manifold housing 21 (to allow moulding of the interior of the nozzle) and thus a manifold plug 224 is provided to seal the manifold 26. The co-axial coextrusion tip 22 is formed by inserting a core tube (or hollow hypodermic needle like tube) 23 into the first or shield tube 25 and through the manifold 26 into the first cavity 28 via the first conduit 223. The first conduit 223 is dimensioned to have a diameter similar to the external diameter of the core tube 23 to ensure a snug and secure fit to prevent leakage of the first reagent into conduit 26. Figure 2F shows the nozzle 22 after insertion of the core tube 23. In use the first or core reagent is located within and extruded from core tube 23, and the second or shell reagent flows in the annular gap between the outer surface of the core tube 23 and inner wall of the first tube 25. The first conduit 223 acts to locate and centre the core tube 23 within the first tube 25 to ensure co-axial extrusion.

In this embodiment the light source 24 is a UV LED mounted externally on the nozzle to cure the reagents after extrusion from the tip. As shown in Figures 2E and 2G a conduit 222 is provided for cables supplying power to the LED. In another embodiment a UV light source may be located internally within the manifold 26 in order to irradiate the second (shield) reagent whilst in manifold 26 just prior to extrusion from the tip. In this embodiment the manifold plug 224 is replaced with an LED inserted through the opening the manifold plug 224 is normally located in. This approach limits or prevents radiation exposure to the user or patient as UV light/radiation is confined to be substantially internal to the nozzle 2 with only minimal light leakage out of the tip 22.

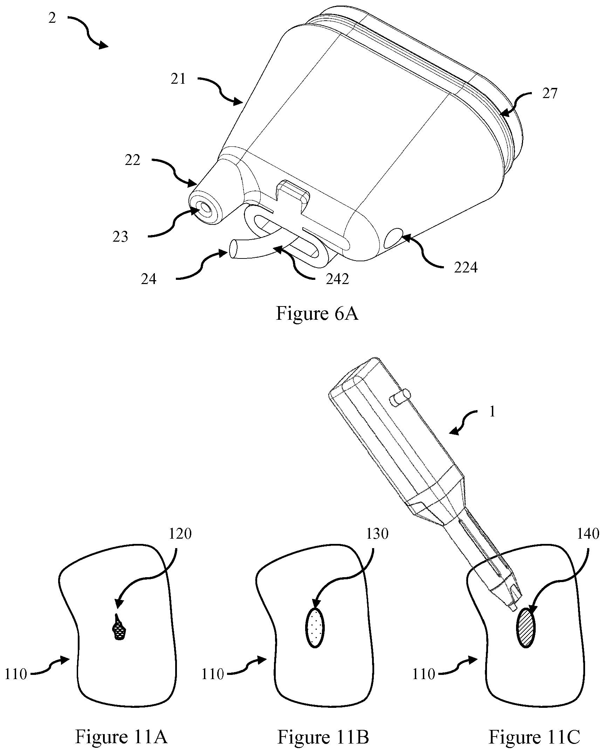

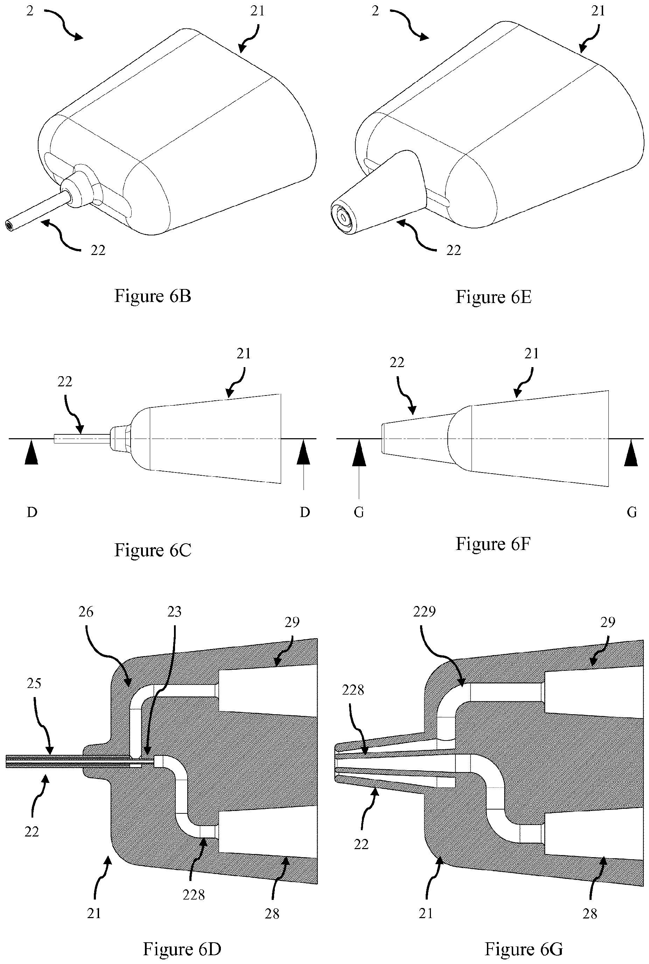

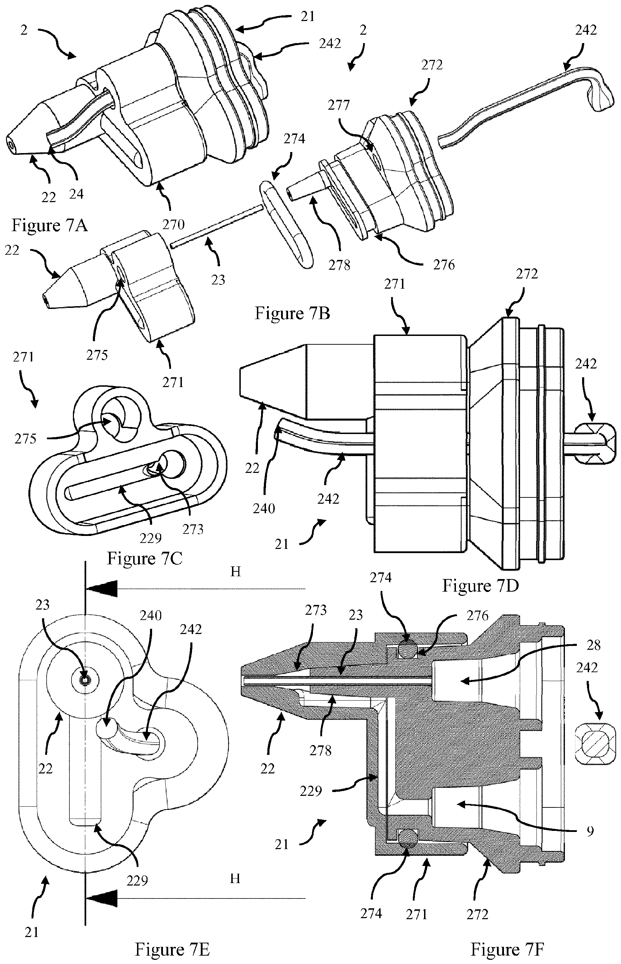

Further embodiments of the nozzle 2 are illustrated in Figures 6A to 6G, and 7A to 7F. Figure 6A is an isometric view of a nozzle of a handheld 3D printing apparatus according to another embodiment. In this embodiment a light pipe 225 extends from an internal light source (e.g. UV LED) located within the nozzle 2. This allows the light to be directed onto the reagents as they are extruded from the tip 22. Figures 6B to 6D show an isometric, end view and sectional view (through section DD of Figure 6C) of another embodiment of a nozzle 2 with the extrusion tip formed from two coaxial hypodermic needle like tubes. In this embodiment the nozzle housing 21 is formed without the co-extrusion tip 22 using plastic injection moulding. The co-extrusion tip 22 is formed by first inserting the shell tube 25 into a tubular aperture formed in the proximal end of the nozzle until it reaches the manifold 26, and then inserting the core tube 23 inside the shell tube 25 until it engaged with the first conduit 228. Alternatively the order of insertion could be reversed, or the core tube 23 could be first inserted inside the shell tube 25, and the co-axial tubes inserted into the proximal end of the nozzle housing 21.

Figures 6E to 6G show an isometric, end view and sectional view (through section GG of Figure 6F) of another embodiment of a nozzle 2 with a directly formed coaxial coextrusion tip 22. That is unlike the previous embodiments there is no requirement to insert a core tube 23 into a formed shell tube 25 to form the tip 22. In this embodiment the first conduit 228 leads directly to the tip 22 - that is the proximal end of the first conduit 228 forms the core tube 23. Similarly the second conduit 229 leads directly to the tip 22 and is formed such that it co-axially surround the core tube 23 (228). This co-extrusion tip is more challenging to make using injection moulding but could alternatively be 3D printed.

Figures 7A to 7F illustrate an embodiment of a two part extruder tip. Figure 7A is an isometric view, Figure 7B is an exploded view, Figure 7C is an isometric view of the tip cap 271, Figure 7D is a side view, Figure 7E is a front view and Figure 7F is a sectional view of section HH of Figure 7E. In this embodiment the two part extruder tip comprises a tip cap 271 and a tip rear 272 which can be clipped together. The tip rear 272 comprises a seal recess 276 which received a seal 274. A light pipe 225 from the circuit board 5 passes through a rear aperture 277 in the tip rear, and forward aperture 275 in the tip cap 271, so that the tip of the light pipe 242 can be directed onto extruded material from the tip 22. Internally a hypodermic tube 23 is inserted into hypodermic support structure 278 extending forward of the tip rear 272 and into chamber 28. The tip cap 271 comprises a channel 229 for receiving shell reagent from cavity 29 and the channel leads to a forward cavity 273 which also receiving the hypodermic support structure 278 and hypodermic tube. Clearance is provided around the hypodermic tube 23 to allow the shell reagent to flow out of the tip with stem cell reagent.

The handgrip portion 3 is shown in greater detail in Figure 3A, and Figures 3B and 3C are isometric views of the first and second reagent containers 8 and 9. The handgrip portion 3 comprises a housing 31 with a hinged portion 36 to allow the housing to be opened up (shotgun like) to receive and load the first and second reagent containers 8 and 9. Alternatively the hinged portion may be omitted and this section left open. The reagent containers 8 and 9 are each formed as a cylindrical tube 82, 92 with a tapered proximal end 83, 93 and a flange 81, 91 at the distal end. Reagent pistons 84 and 94 are located at the distal end to enable reagent to be pushed out of the proximal end of the reagent containers. The first flange 81 has a first profile shape, in this embodiment a rectangular shape, and the second flange 91 may have a second profile shape different to the first profile shape, in this embodiment a diamond like profile shape. The handgrip comprises a reagent container support arrangement (or interface) 35 with a first cut-out portion matching the first profile shape 81 of the first reagent container and a second cut-out portion matching the second profile shape 91 of the second reagent container. This creates an error proof interface to ensure correct loading of the first and second reagent containers into the handgrip (and into the nozzle 2) to ensure the first reagent feeds the core tube 23 and the second reagent 9 feeds the shield tube 25. In other embodiments, a colour matching scheme could be used, such as a red syringe in a red hole or flange, and a green syringe in a green hole or flange. In one embodiment the reagent containers are modified syringe bodies such as Luer slip syringes. Reagent container volumes would typically be in the range of 0.5cc-5cc.

The main elongated body of the handgrip 3 further comprises a first viewing aperture 38 for viewing the first reagent in the first reagent container, and a second viewing aperture 39 for viewing the second reagent in the second reagent container. In this way a user can observe how much reagent has been used or is remaining in each reagent container. An aperture 34 is also provide for a start/stop (or on/off) button 34 which engages with a toggle switch (or actuator) 33 fitted in or below the aperture 34 and connected to the electronic control board 5 (and power supply 6).

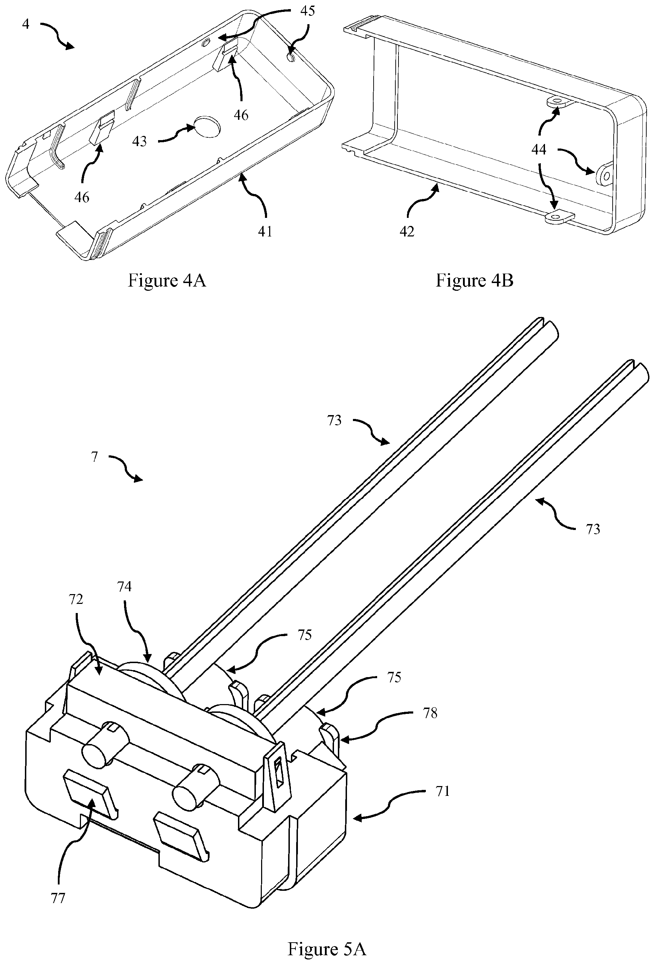

The upper housing is shown in more detail in Figures 4A and 4B which are isometric views of the upper section 41 and lower section 42 which clip together to form the rear housing 4 via matching retention tabs 44 and retention projections 45 located on opposite housings 41, 42. The housing may encapsulate the electronic control circuit 5 and power supply 6. In this embodiment the electronic control circuit 5 comprises a printed circuit board (PCB) with a microcontroller and associated electronical components. The upper housing 41 also comprises internal supports 46 for supporting the PCB. Power to the electronic control circuit 5 is provided by power supply 6. In some embodiments the electronic control circuit may provide voltage and current regulation functionality. In one embodiment the power supply module 6 is a pair of AA batteries. Another embodiment the power supply module 6 is three AAA batteries. Such batteries are relatively cheap and have a long shelf life and can be installed during manufacture and left in the apparatus during storage and the long shelf live confers long shelf life to the apparatus whilst minimising setup time, as only reagent containers then need to be fitted prior to use. In other embodiment other battery technologies such as Lithium Polymer (LiPo) or other types of rechargeable batteries can be provided. These tend to be more expensive and require some additional preparation time. For example rechargeable LiPo batteries are typically delivered half charged, and need to be charged prior to use, and their use adds additional cost as recharging circuitry is required.

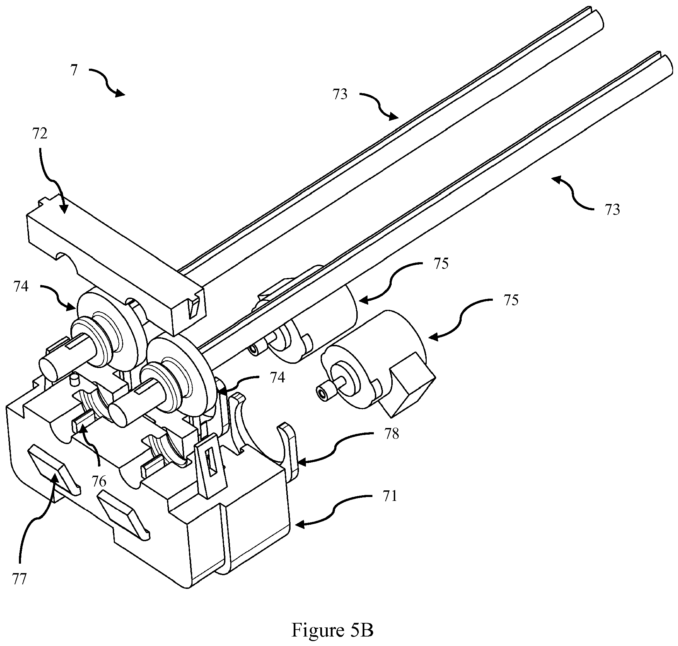

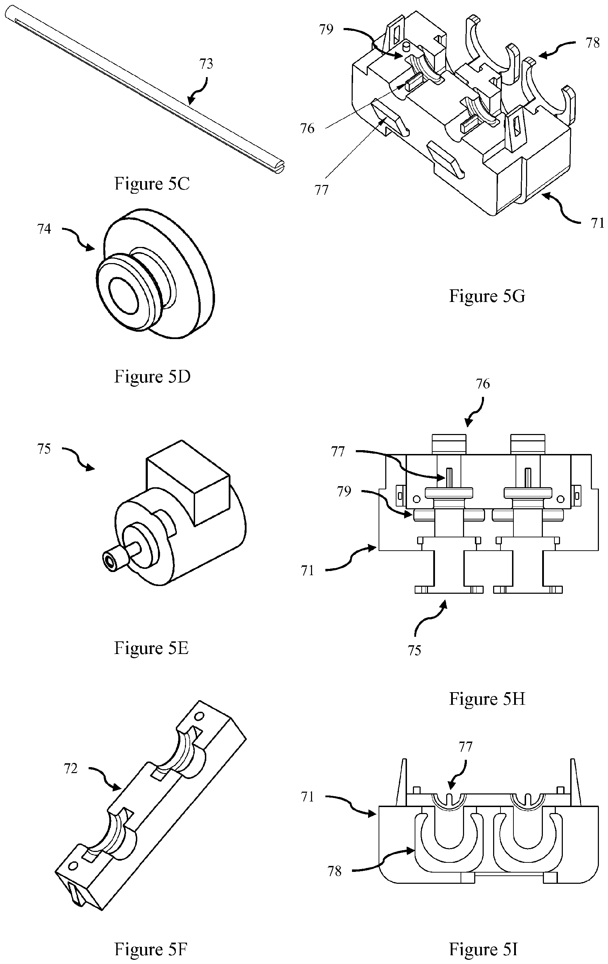

The housing 4 also houses the drive train arrangement 7, which is configured to drive the first reagent piston 84 into or from a distal end 81 of the first reagent container 8, and to drive the second reagent piston 94 into or from the distal end 91 of the second reagent container 9. Figures 5A and 5B are assembled and exploded isometric views of a drive train arrangement according to an embodiment. In this embodiment the electric drive train arrangement 7 comprises a first and second DC stepper motor drive 75, a first and second jack screw 73 and a gear set in the form of a jack spur gear 74 to transmit torque from each stepper motor 75 to the respective jack screw 73. Figures 5C, 5D, 5E each show isometric views of the jack screw 73, jack spur gear 74, and stepper motor 75 in the drive train arrangement of Figure 5A. Figures 5G, 5H and 5I show isometric, top and end views a drive cradle 71 and Figure 5F shows an isometric view of a drive cap 72. The drive cradle 71 comprises reagent retention springs 77 on the proximal face for engaging with the flanges 81 and 91 of the reagent containers. Another embodiment has the springs 77 located on the rear housing. The distal end of the drive cradle 71 comprises two stepper motor supports which support and receive the stepper motors 75 (see Figure 5H). Additionally the body of the drive cradle 71 comprises a jack spur recess for receiving the jack spur gear and cut out for receiving the proximal end of the jack screw with the cut-out comprising anti rotation guides (or projections) which prevent lock and prevent rotation of the jack screws 73. The drive cap 72 sits over the proximal ends of the jack screws and jack spur gears to lock the drive train together.

The drive train arrangement 7 is controlled by the electronic control circuit 5 to control extrusion of the reagents from the first and second reagent containers 8 and 9 by controlling the speed of the stepper motors. Activation of the stepper motors by the electronic control circuit 5 drives rotation of the jack spur gear which in turn drives the jack screw forward to drive the reagent pistons 84 and 94 from a distal to a proximal position and force extrusion of reagents from the proximal (nozzle) end of the reagent containers 8 and 9. Prior to use a start-up purging operation can be performed to start flow through the tip to prepare it for surgical operation.

The microcontroller comprises embedded software for monitoring the state of the on/off switch 32, and controls the speed of the stepper motors (and thus extrusion rate) based on changes in detected changes in state. For a simple on/off embodiment with a constant (fixed) extrusion rate, the microcontroller stores a fixed speed (which may be stored as a frequency, voltage or a current level) for each stepper motor. The speed may be the same for each stepper motor, in which case the reagents are extruded at the same rate, or different speeds may be used for each stepper motor, in which case the reagents are extruded at different rates. This choice will depend upon the material or chemical properties of the reagents, or the desired application. In some embodiments the rate of extrusion of the first and second reagents is a mechanically fixed ratio with 2 jack screws 73 driven by a common motor.

In some embodiments, the user can control the extrusion speed or flow rate via a user interface 51 such as a knob, one or more buttons, or other speed control actuator that allows a user to set or change the rate of extrusion. In the embodiment shown in Figure 4A an aperture is provided in the upper section to allow a speed control knob 51 projects through the upper section from the PCB 5. In these embodiments, the knob or button may have a number of predefined positions (e.g. 2, 3 or 4 positions) or digital states, with each position corresponding to a different speed, for example fast/slow (2 states), or fast/medium/slow (3 states). In this embodiment, the microcontroller stores a predefined speed for each motor (reagent) for each state, and controls the stepper motors at the stored speed corresponding to the selected state. This provides the user with limited speed control which can be preconfigured to match the needs of specific surgical applications (for example different steps in a procedure may use different speeds). Determination of the predefined speeds may be obtained through calibration processes. Alternatively or addition to adjusting speed, a user input could be used to alter the mixing ratio.

In some embodiments, for example for research uses or specialised surgical applications, variable (i.e. continuous or semi-continuous) speed control over a predefined range may be desired. This may be in the form of an analog speed control knob in which the angle of the knob corresponds to a speed over a predefined range (e.g. a rheostat) or a digital system in which the rotation through a defined arc (or angular steps) is detected and corresponds to a fixed speed step change, with the angle of rotation defining the direction of change (increase or decrease) between maximum and minimum limits. Additionally in some embodiments the rate of extrusion of the first and second reagents (and first and second stepper motors) is independently controllable. This may be through providing two speed control actuators or a combination of actuators such as knobs and buttons, for example a button may enable selection of which reagent, and a knob enables selection of speed. Alternatively a button or multiple buttons may be used to select pre-set speeds and or extrusion ratios.

In some embodiments the viscosity of reagents is temperature dependent and thus in some embodiments heating elements and sensors such as a Peltier cell system are provided, for example in the handgrip and the electronic control circuit 5 is used to heat and then maintain the temperature of inserted reagent containers 8 and 9 at a predefined temperature. Control of the temperature can also be used as a form of speed control (or in conjunction with speed control) by enabling control of the viscosity. Alternatively one or more temperature sensors may be included and the control system may vary the extrusion rate (e.g. stepper motor speed) of one or both of the reagents to compensate for changes in viscosity or mixing rate with temperature to ensure consistent application or mixing of the reagents. This may be based on calibration data.

In one embodiment the desired speed control or flow rate setting for a reagent is encoded on the reagent container so that when inserted in the handgrip a sensor reads or detects the encoded speed control or flow rate setting, and sends this information to the microcontroller. The microcontroller can then use this information to set the speed of the corresponding stepper motor. In some embodiment the encoded value may be a voltage or current level which the microcontroller can directly use, or the microcontroller may store sets of predefined speeds/control values each associated with a code, and thus by reading the code on the reagent container the microcontroller can look up the appropriate speed setting. The encoding maybe a physical encoding such as projection in a defined location on the flange which engages a switch, or a barcode or similar code printed on the reagent which is scanned and read by a light sensor in the handgrip housing.

In one embodiment the inventive biopen apparatus is preloaded with batteries and provided in a sterile container as a disposable apparatus. At the time of use, the sterile container is opened, and reagent containers 8 and 9 are loaded into the device. Once the operation is completed the entire device is disposed of. Through the use of cheap and long lasting AA(A) batteries, fixed speed/extrusion rate (i.e. simple electronic circuit) and construction using injection moulding techniques the cost of the device can be kept low, whilst also providing a long shelf life (largely depending upon the shelf life of the batteries). In another embodiment the biopen is disposable but additionally allows limited speed control (i.e. 2, 3, or 4 speeds). That is the apparatus is supplied in a sterile condition, and reagents can be loaded and reloaded during use (whilst maintaining sterility), and after use apparatus is disposed of.

In other embodiments the biopen could be reusable and sterilisable, or be comprised of disposable parts and sterilisable parts, or segmented between sterilisable (contacts the operator) and non-sterile (isolated from the operator). In one embodiment the nozzle 2 and handgrip 3 (i.e. the parts contacting the patient and operator) is separable from the rear housing 4, and the nozzle 2 and handgrip 3 are either disposable or can be sterilised using radiation or an autoclave, and the rear housing containing the electronics, mechanical components and batteries is sterilised using an alcohol swab or bath (70-85% ethanol). In this case the batteries are replaced and/or recharged between uses. Additionally the reagents can be loaded and reloaded during use (whilst maintaining sterility).

In one embodiment the embedded software performs additional functions such as reloading or error detection. This may include detecting an empty reagent container condition (or full extension of the jack screw) in which case extrusion is ceased and the user is alerted to replace the reagent. Similarly the software could detect an input from a user to change reagents and automatically shuts off the light source and retracts the piston actuators to allow reloading. The software could also be used to control an initial purge to ready the device for operation. The software could also monitor the drive arrangement or flow through the tip and detect an extrusion error (e.g. blocked extruder or blocked tip) in which case operation is ceased and the user alerted. The software could also detect failure of the light source in which case extrusion is ceased and the user is alerted. The software could also detect a low battery voltage and alert the user. The user could be alerted using one or more externally visible LED's located on the housing and turned on or strobed when an error condition is detected. In one embodiment the electronic control circuit comprises a wireless communications chip to allow wireless control of the apparatus. The software may perform the above tasks by turning on an acoustic signal instead of using visible LED's. In one embodiment a combination of acoustic and light signals may be used.

Other variations can be used to drive the reagent pistons 84 and 94. For example the drive train arrangement could comprise a stepper motor drive with a worm gear, rack and guide or a linear stepper motor with a leadscrew/jackscrew guide. In one embodiment a brushed DC motor drive is used with a jack screw, jackscrew guide, and a double worm reduction gear set to transmit torque from the motor to the jack screw at a much reduced speed, with a ratio in the range of 80-300:1, and a worm gear with provision for a magnet to facilitate sensing of the motor shaft to regulate motor speed. In one embodiment the drivetrain is a brushless DC motor drive with a jack screw, jack screw guide and a gear set to transmit torque from the motor to the jack screw.

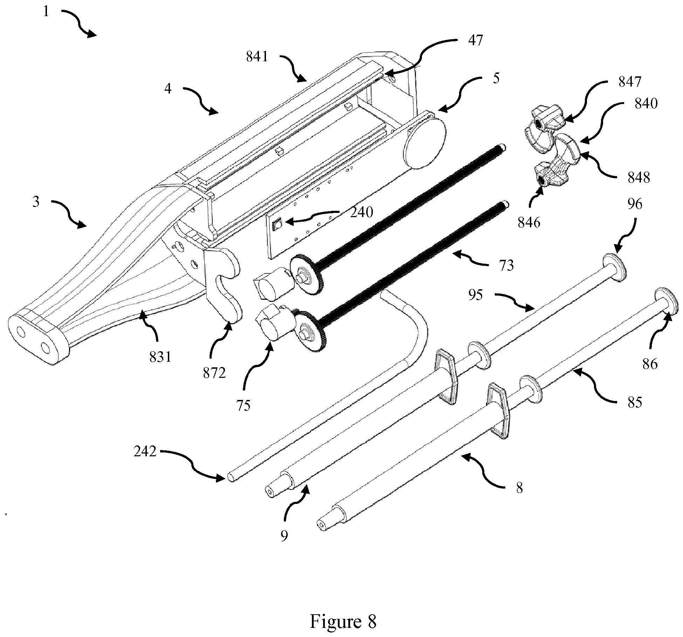

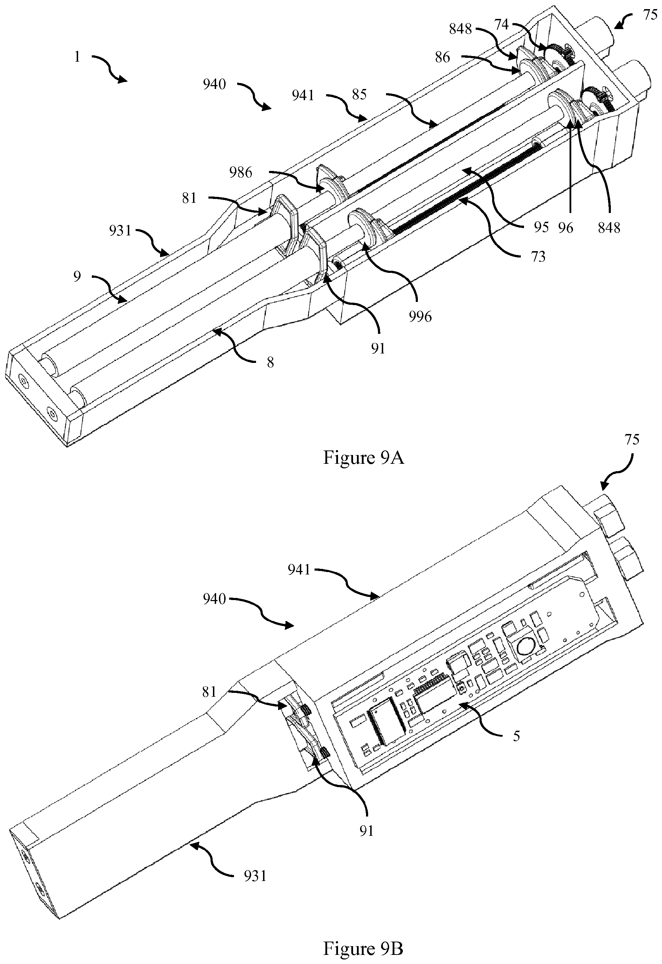

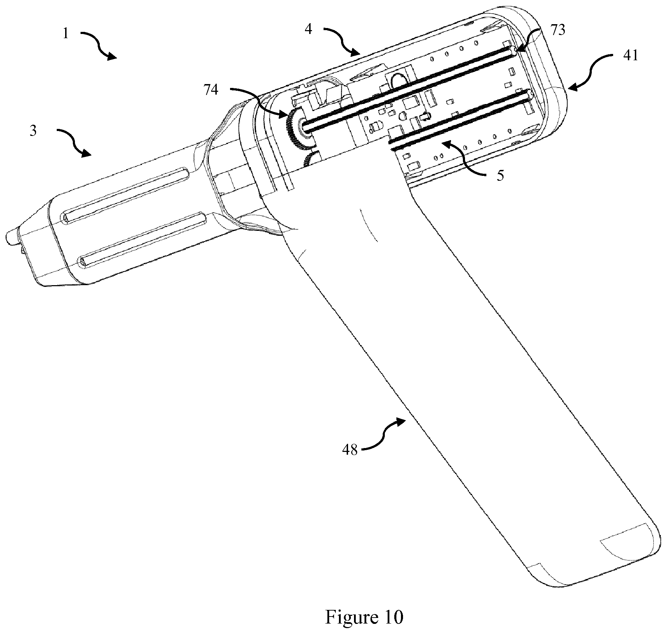

Other embodiments include a side loading embodiment, shown in exploded isometric view in Figure 8, a rear loading embodiment shown in isometric views in Figures 9A and 9B. The side loading embodiment shown in Figure 8 comprises a handgrip housing 831 and rear grip housing 841 which houses batteries and PCB board 5. This embodiment uses standard 1ml syringes 8 and 9, and the drive arrangement comprises a plunger actuator 840 which comprises a threaded aperture 846 which receives the jack screw shaft 73. The plunger actuator 840 further comprises an actuator plate 848 for pushing the plunger (or piston) stops of the syringe plungers 85 and 95, and an anti-rotation feature 847, which in this case is a flange that is received in anti-rotation slot 47 located in the rear housing 841. This ensures that when the jack screw is rotated, the plunger actuator is prevented from rotation and thus forces the actuator plate to move axially along the jack screw (via threads in the threaded aperture 846), and thus plunge or retract the piston in the syringe. A motor retention plate 872 is located at the junction of the handgrip housing 831 and rear grip housing 841. The rear loading embodiment shown in Figures 9A and 9B is another embodiment that is configured to receive standard 1ml syringes. In this embodiment a single housing 940 comprises handgrip portion 931 that houses the syringe reagent containers 8 and 9, and a (joined) rear housing portion 941 that houses the drive assembly 7, the syringe plungers 85 and 95, and the PCB 5 which is located on the rear of the housing 940. This arrangement uses the same drive arrangement as that shown in Figure 8 with plunger actuators 840 located on jack screws 73. The plunger stops 86 and 96 are shown in a distal location and proximal location 986 and 996. Figure 10 shows another embodiment in which the housing further includes a pistol grip 48 extending roughly orthogonally from the main housing body 4.

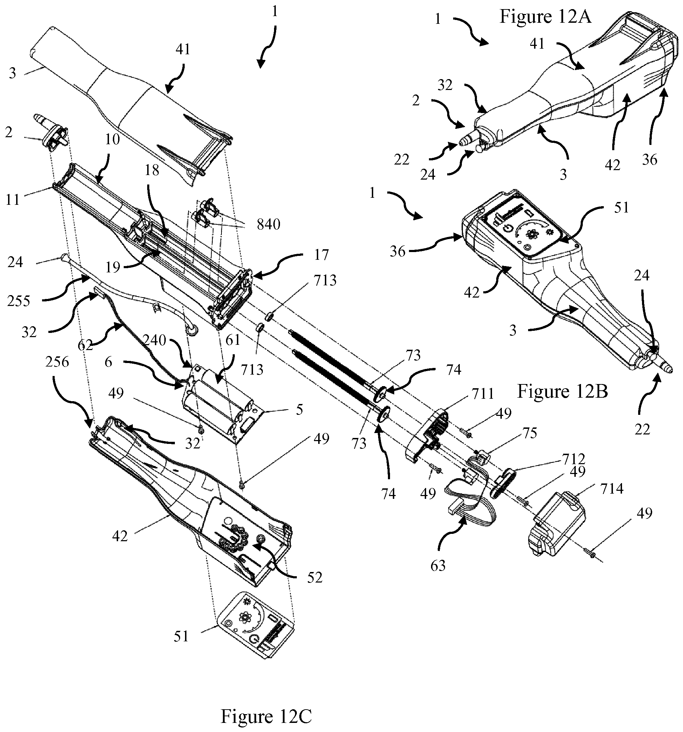

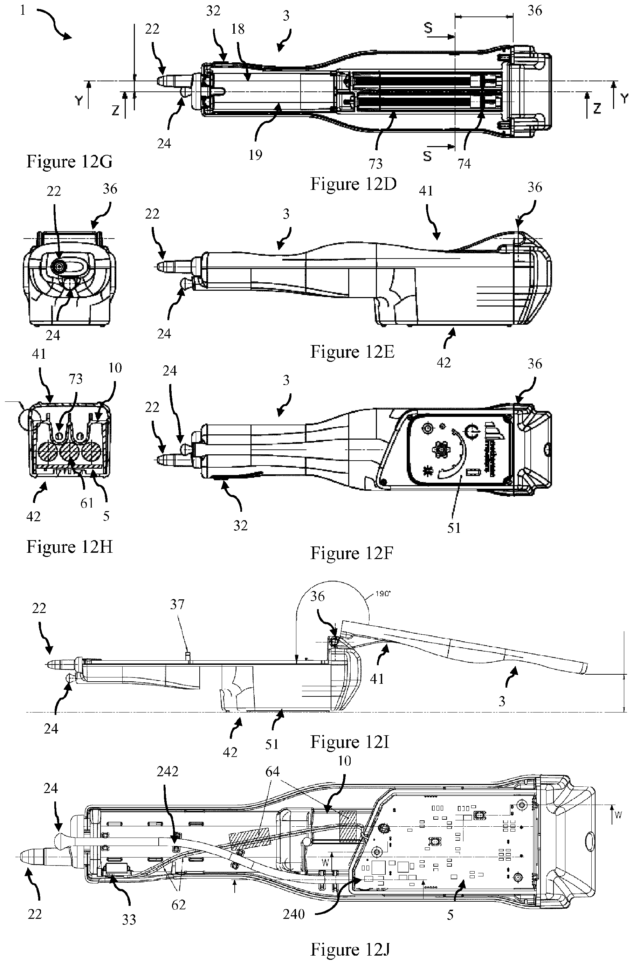

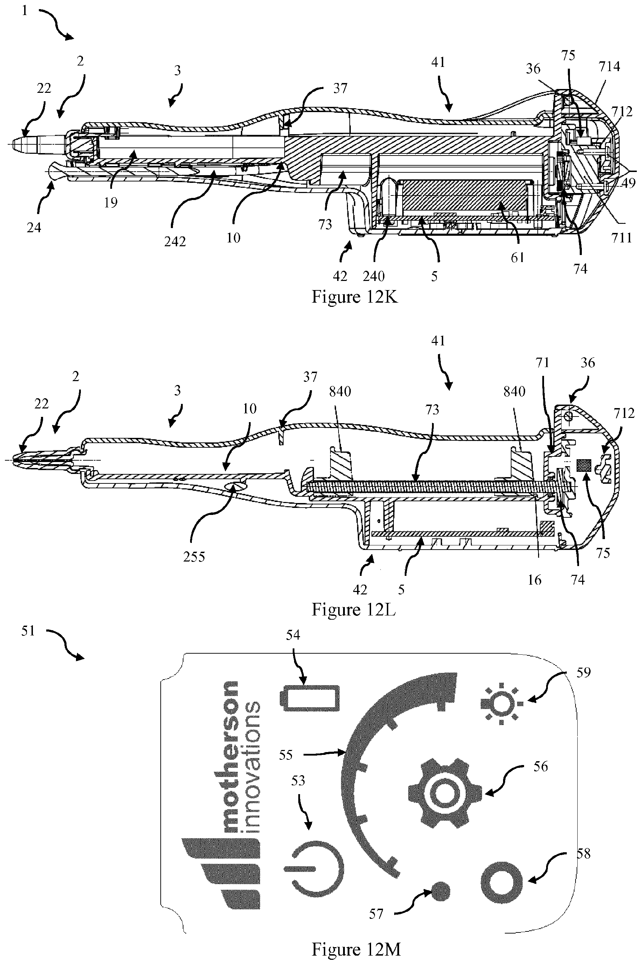

Figures 12A to 12M show another embodiment of a biopen apparatus 1 with a rear hinge allowing top loading of syringes. Figures 12A and 12B show isometric views and 12E, 12F and 12G show side bottom and front views of the biopen apparatus, and Figure 12I shows side view with the top cover open and flipped back. Figure 12D is a top view with the upper housing (top cover) 41 removed, Figure 12J is a bottom view of the embodiment shown in Figure 12A with the lower housing (lower cover) 42 removed. Figure 12H , 12K and 12L are sectional views through sections SS, YY and ZZ of Figure 12D respectively.

As can be seen in these embodiments, the apparatus comprises a frame 10 which in turn supports the nozzle assembly 2, reagent containers 8 and 9 (not shown) in cavities 18, 19, drive assembly 7, control module 5 and power supply 6. The housing surrounds the frame and comprises an upper housing 41, a lower housing 42, and a rear motor cover 714. In this context relative locations such as upper, lower, forward or proximal, and rear or distal are referenced with respect to the nozzle tip when held by a user. The upper housing 41 has a cradle shape and comprises clips on the inside surfaces to allow the housing 10 to be clipped into the lower housing 42. The nozzle assembly 2 projects forward of the proximal (or forward) ends of the upper housing and lower housings 41 and 42. The lower housing 42 is connected to the rear motor cover 714 using a hinge 36 that allows the upper housing 41 to hinge upwards and rearward as shown in Figure 12J. In this embodiment hinging through an opening angle of up to a point where the upper end of the upper housing 41 is the same level of the lower housing 42 is possible. The opening should be at least 90° in order to allow for an easy replacement of the reagent containers. It is also possible that the upper housing open with an angle of 270° so that in case the user has the BioPen in its hands the upper end of the upper housing points downwards. On one embodiment the upper housing may flip through 90° to 270°. For example, the opening angle may be 90°, 100°, 110°, 120°, 130°, 140°, 150°, 160°, 170°, 180°, 190°, 200°, 210°, 220°, 230°, 240°, 250°, 260° or 270° or any other angle. A latch 37 is formed on the inside upper surface of the lower housing 42 which engages with the inside of the upper housing to retain the upper housing in a closed position. In other embodiments the hinge is located in a rear portion of the housing to allow the upper housing component 41 to flip through at least 90° to provide internal access to allow loading of reagent containers. In some embodiments non-biocompatible materials and components are separated from the operating environment by mechanically sealed enclosures. In some embodiments the upper housing 41 (or an upper portion of the housing) is transparent to allow viewing of the reagent containers and actuators. In some embodiment the frame 10 and upper housing 41 (or an upper portion of the housing) are embossed with lettering to locate the reagents in the correct position.

The housing is moulded so that the biopen apparatus can be comfortably held by a user's hand with the upper housing 41 comprising a bump near the palm and a depression near the fingertip region of the handgrip portion 3. A start/stop button 32 is located on the proximal side of the lower housing 42 which engages with actuator 33 to allow a user to control extrusion of material from the biopen. The start/stop button is formed as an extrusion button in the side of the lower housing 42. In one embodiment a user interface 51 as shown in Figure 12M is located on the lower housing 42 (underside when held) of the biopen.

The drive assembly comprises two jack screw (shafts) that pass through apertures in the rear wall 17 of the frame 10 and end in jack spur gears 74 which is held in place by a retainer 712, which is mounted to the frame 10 and rear motor cover 714 via screws 49. The retainer 712 also supports the stepper motors 79. Plunger actuators 840 are mounted on the jack screw such that rotation of the jack screw moves the plunger actuators 840 forward (or rearward) to drive the plungers of the syringes (located in the forward or handgrip portion) to extrude material.

In this embodiment the power supply comprises three 1.5V AAA type batteries which are located in a battery compartment on the underside of the frame 10, and above the PCB circuit board on which is mounted control electronics including a microprocessor and power circuits to respond to user interface signals and to control the operation of the apparatus. Wires 63 run from the PCB on the underside of the frame 10 to the start/stop button 32, and wires 65 run from the PCB to the stepper motors 75 to control extrusion. A UV LED 240 is mounted on the top surface of the PCB, and a light pipe 242 directs the UV light to the tip of the nozzle 2 to provide a UV light source 24 to cure extruded material. Figure 12J is a bottom view with the lower housing 42 removed to show the light pipe path 242 and underside of PCB 5 which comprises actuators 52 which receive user inputs via the user interface 51 and LEDs for indicating status to the user interface 51.

The user interface is configured to allow a user to control the rate of extrusion of the reagents from the first and second reagent containers, and select between at least two operating modes (for example manual and automatic). As shown in the embodiment of Figure 12M the user interface 51 comprises an on/off power button 53, a battery indicator (e.g. green for good power and red for low power) 54, a speed indicator 55, which may be provided as a series of lamps (or lamp segments) to indicate the current speed of the device, or to allow the user to set the extrusion speed. A setting control button 56 allows a user to select an operating mode, for example one of a predefined set of operating modes. The user interface further comprises a purge core indicator lamp 57 and purge shell indicator lamp 58, and a curing mode light 59 (for example when the UV lamp is on and/or post illumination as the extruded material cures). An audible beep (65dBA) may be used to confirm user input and signal faults. Indicator LEDs are mounted on the PCB and may directly illuminate associated indicators on the user interface 51, or may use light pipes to direct light to the user interface 51.

In one embodiment, the "on" state is indicated by the presence of at least one illuminated light. The biopen apparatus can be configured so that the illuminated light cycles clockwise or counter clockwise and cycles back to the starting position once the end is reached. The default configuration is to cycle clockwise starting in the purge Shell position. By default:
The curing lamp is not illuminated during purging;
The curing lamp is on low power during extrusion to facilitate a pre-cure, configurable to any pattern and/ or percentage of full power (set at the factory);
The light is applied at any configurable percentage or pattern (set at the factory) in light only mode. No other functions are active;
The curing light is illuminated in time limited periods to facilitate control over light dose/ curing of materials.

In other embodiments the curing lamp may be applied intermittently during extrusion to create desirable mechanical properties in the extruded material.

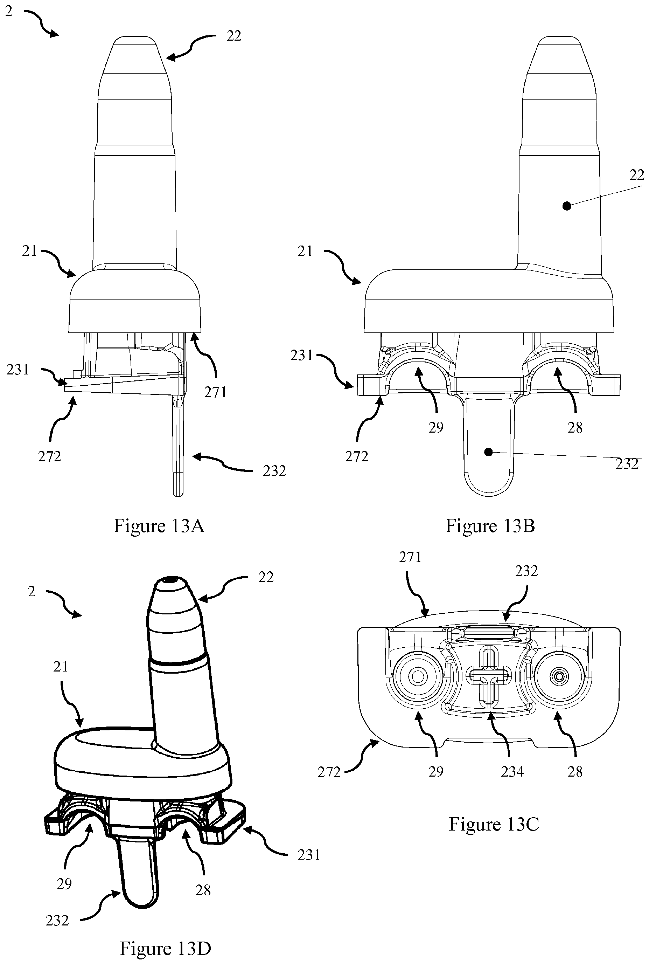

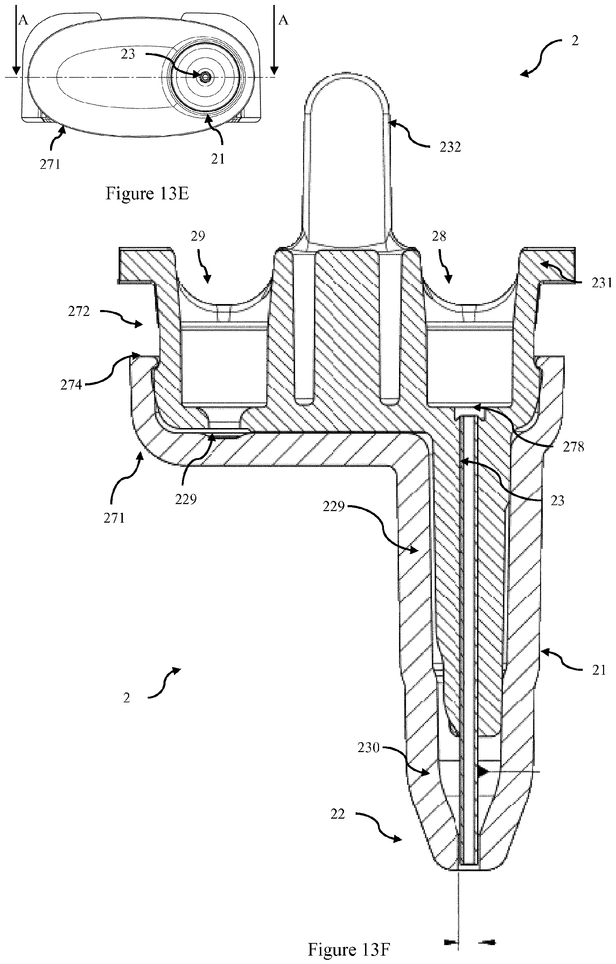

Figures 13A to 13F show various views of the nozzle assembly 2 of this embodiment. Figures 13A, 13B, 13C, 13D, and 13E show two side, top, end, isometric and top views, and Figure 13F is a section view of the nozzle assembly through section AA of Figure 13E. In this embodiment the nozzle assembly 2 is formed of a cap portion 271 and nozzle portion 272.

Both the cap portion 271 and nozzle portion 272 are designed to be formed using injection molding processes with the ability to control tolerances to a high level. The cap 271 is moulded and stripped from the undercut in the tool while still hot permitting a peripheral clip retention feature 274 to be formed. The nozzle portion 272 is moulded over the hypodermic tube 23 in a single operation. Specialised tooling is required for holding the tube in place during moulding. The nozzle portion 272 forms the mechanical interface with the frame 10 and seals to the syringes via a Luer slip interface.

The cap portion 271 is a clip/ interference fit on the nozzle portion 272 forming a fluid tight seal once pressed into position negating the need for any additional sealing method. The cap portion 271 also forms a fluid manifold 229 guiding the shell material from the syringe to a concentric ring 230 around the hypodermic tube 23 thus forming a coaxial extrusion. In other embodiments the nozzle assembly is sealed with an o-ring and fastened with one or more screws.

The nozzle assembly (2) may be integrated into the housing, i.e. may be permanently fixed so that it cannot be removed from the biopen. In one embodiment, the nozzle assembly (2) is removable from and attachable to the housing. This allows to attach different types of nozzle assemblies (2) to the biopen depending on the application for which the biopen should be used. For example, by replacing the nozzle assembly (2) it is possible to have differing blend system, such as the first reagent being extruded throughout a core aperture (23) and the second reagent being extruded through an annular aperture (25), whereas by replacing the nozzle assembly (2) the first reagent may be extruded throughout an annular aperture (25) and the second reagent may be extruded through an a core aperture (23). The possibility of replacing the nozzle assembly may also allow to replace defect or clogged nozzles assemblies.

The nozzle assembly 2 is an example of a separate assembly to the frame 10 to permit changing of the nozzle assembly if damaged, or at a device level, refinement of the nozzle assembly design for alternate applications. Alternate configurations may include side by side extrusion, different geometric shapes, different length nozzles, different diameter nozzles, different geometric ratios etc. The rear of the nozzle portion 272 comprises a rear shoulder, which as shown in Figure 12L creates cavity with the distal end of the cap portion 271 within which is received the proximal ends of the upper and lower housings 41 and 42, and the proximal end of the frame 10 to secure the nozzle assembly 2 in place. A flat rearwardly extending projection 234 located on the upper side of the nozzle portion 272 acts as a retaining surface for a clip formed on the underside of upper housing 41.

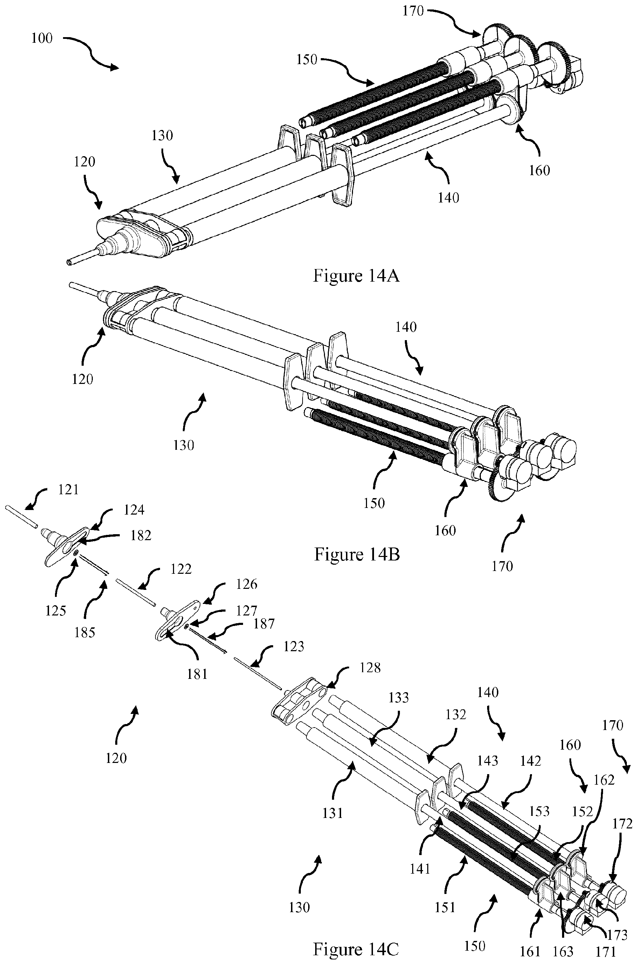

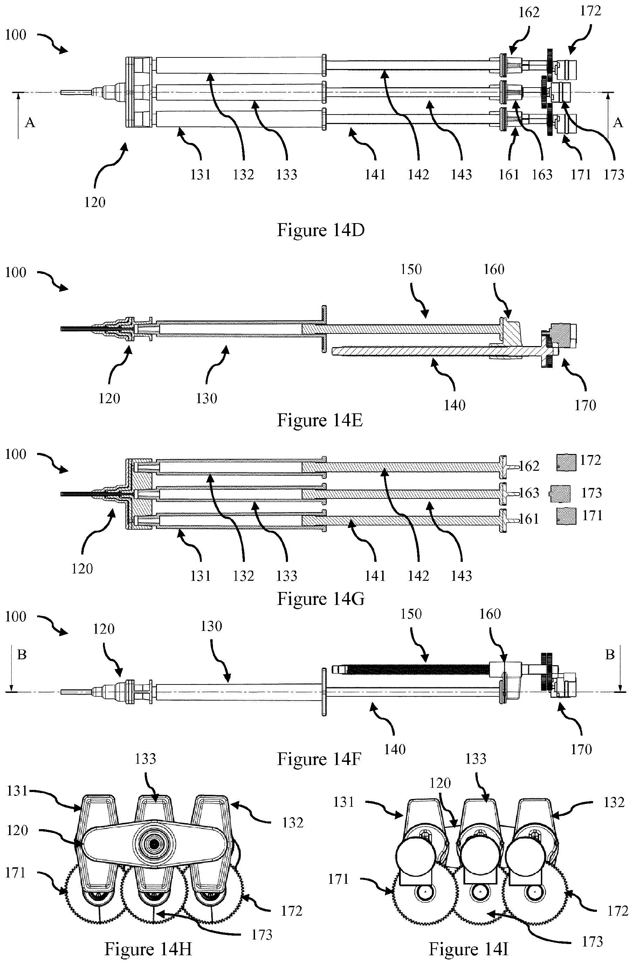

The biopen as described in the embodiments above may be further modified to include additional reagent containers and to co-extrude these additional reagents. In these embodiments the previously described reagent support arrangements and the electric drive train arrangement is further configured to drive each additional reagent piston into a distal end of the additional reagent container, and the nozzle is further configured to receive the additional reagent driven out of a proximal end of each additional reagent container and co-extrude each additional reagent with the first and second reagents. In such embodiments, the biopen may comprise at the distal end of each reagent container a flange with a unique profile shape, and each reagent container support arrangement may comprise a cut-out portion matching the unique profile shape. Figures 14A to 14J show another embodiment of a triple barrel concentric syringe assembly 100. This embodiment facilitates the placement of a tri-axial bead of material and is straightforwardly adapted to any desired number of coaxial elements. Figures 14A, 14B, 14D, 14F, 14H, and 14I show a first isometric, a second isometric, top, side, front and rear views, whilst Figure 14C shows an exploded view, and figure 14E and 14G show section views through sections AA and BB of Figures 14D and 14G respectively. In this embodiment the nozzle 120 is a triple concentric tube arrangement that interfaces with syringes 130 to extrude a central bead of material with a coaxial construction via plungers 140 driven by plunger actuators 160 mounted on jackscrews 150 driven by stepper motors 170. In this embodiment each of the three syringes (131, 132, 133), are driven by identical and separately controlled drive assemblies (i.e. syringe 131 and plunger 141 are driven by plunger actuator 161 on jackscrew 151 driven by stepper motor 171; syringe 132 and plunger 142 are driven by plunger actuator 162 on jackscrew 152 driven by stepper motor 172; and syringe 133 and plunger 143 are driven by plunger actuator 163 on jackscrew 153 driven by stepper motor 173). In this embodiment each of the three independent syringe and drive assemblies are arranged side by side, or stacked, in the same plane. As shown in Figure 14D and 14I, the location of the central jack spur gear and motor 173 is longitudinally (or distally) offset relative to the adjacent jack spur gears to reduce the lateral width of the triple syringe assembly.

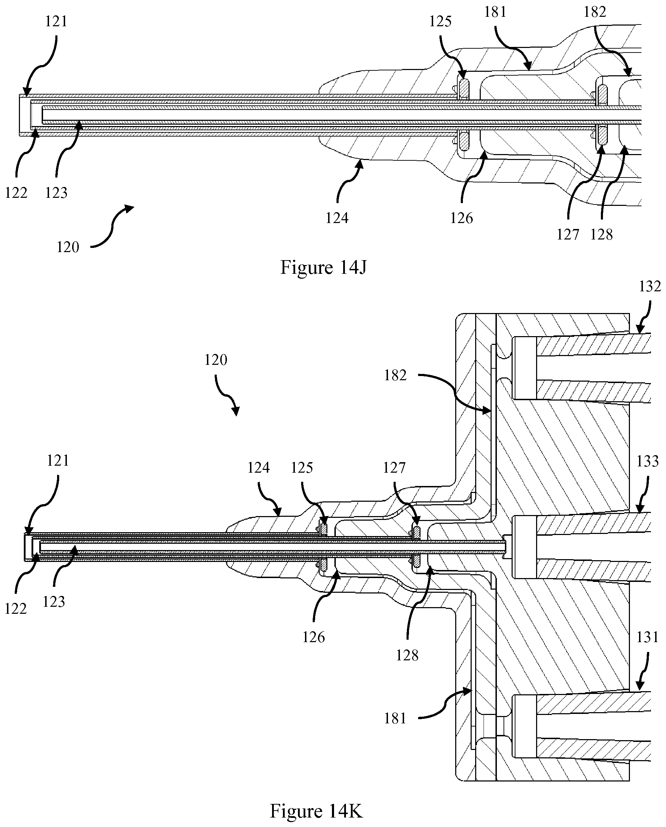

In this embodiment the central syringe 133 delivers the core material, and the two outermost syringes 131 and 132 (each adjacent to the central syringe) deliver the outer and intermediate shell materials respectively. Figures 14J and 14K are close up views of the nozzle assembly of Figure 14E and 14G respectively showing orthogonal sections. As with the two material embodiments the delivery tube (tip 21) is formed of concentric hypodermic tubes 121, 122, 123, in the nozzle which is overmoulded. The nozzle assembly 120 comprises an outer cap 124 with an integral overmoulded outer tube 121, an intermediate manifold 126 with an integral overmoulded intermediate tube 122 and a nozzle base manifold 128 with an integral overmoulded core tube 123 and three receiving cavities for receiving the central core syringe 133, the intermediate syringe 132 and the outer syringe 131 respectively.

The tubes 121, 122 and 123 are sized to permit nesting and the construction of the tri-axial (or N axial) bead of extruded material. The stacked assembly uses die plates with three fine wires between each nested tube to maintain the coaxial alignment. For example as shown in exploded view 14C and section views 14J and 14K, cap die plate 125 is located on the inner (distal) sides of cap manifold 124 and receives spacing guide wires 185 which spaces apart intermediate tube 122 and outer tube 121, and similarly intermediate die plate 127 (or alignment disk 127) is located on the inner (distal) sides of intermediate manifold 126 and receives spacing guide wires 187 which spaces apart core tube 123 and intermediate tube 122. In another embodiment the tubes can have a trilobular profile to facilitate coaxial location. In another embodiment the tubes can have additively manufactured location features integrated onto the tubes.

Cap 124, intermediate manifold 126 and nozzle base manifold 128 when stacked form the fluid manifolds to each respective tube and sealing faces. As shown in exploded view 14C and section views 14J and 14K, cap manifold 124 comprises a outer channel 181 located on the inner (proximal) side of the cap manifold 124 leading from the outer syringe 131 (via aperture in the nozzle base manifold 128) and intermediate manifold 126 comprises a intermediate channel 182 located on the inner (proximal) side of the intermediate manifold 126 leading from intermediate syringe 132 (via aperture in the nozzle base 128). Additional sealant, glue or gaskets may be applied in some embodiments.

In other embodiments the present system could be extended to add additional syringe assemblies to extrude N-axial beads of material. i.e. using 4, 5, 6, 7 or even more syringes. Generally, N materials and N associated syringes and drive assemblies may be used, wherein N is an integer, for example from 1 to 10. In other embodiments, other geometrical layouts could be used such as distributing the syringe and driver arrangements around a central axis (e.g. at 0°, 120° and 240°) and redesigning the manifolds (or fluid delivery channels) in the nozzle 120.

Thus, the handheld 3D printing apparatus of the invention may generally be used for extruding radiation curable reagent compositions. The radiation curable reagent composition may additionally cured by using the handheld 3D printing apparatus, for example using a light source which is part of the biopen. In one embodiment the light source may be an external light source.

Embodiments of the handheld 3D printing apparatus or biopen have a number of surgical and research uses. For example the biopen can be used for repairing defects of an mammalian body. Such defect may be, but not limit to, tissue defects or bone defects. In one embodiment, the repair relates to biological materials which are unable to self-repair such as cartilage or corneal tissue. In such applications the biopen can be used to directly write 3D living cells onto the damaged area for tissue or bone regeneration. For example cartilage is unable to self-repair and can become damaged through physical activities, wear, trauma or degenerative conditions. A biopen loaded with appropriate stem cells can be used to perform in-situ repair, and current surgical interventions are of limited effectiveness. It is also possible to use the biopen for cell types capable of repair, such as skin or bones. In such cases the biopen could be used to directly print or write living cells onto damaged tissue to assist with the repair process. For example bone stem cells and bone growth factors could be printed on fractures or in other bone surgery such as spinal fusions to stimulate bone growth. Similarly keratinocytes and other skin cells could be directly printed onto cuts, abrasions or burns to stimulate skin repair and minimise scar tissue formation.

Figures 11A to 11C illustrate an exemplary repair process using the biopen loaded with stem cells which have been cultured to differentiate down a chondrocyte lineage. For example adipose stem cells when cultured with appropriate growth factors can be directed to differentiate into chondrocytes. Figure 11A shows a section of knee cartilage 110 with a damaged section 120. The surgeon can optionally excise a section 130 to remove the damaged tissue as shown in Figure 11B, and then as shown in Figure 11C the biopen can be used to directly print a biomaterial 140 into the excised section 130. In this case the surgeon draws a series of adjacent lines across the excised section 130 until the section 130 is completely filled in creating an in-situ repair.

In one embodiment the handheld 3D printing apparatus or biopen may be mounted to a robot or robot arm.

Embodiments of the handheld 3D printing apparatus or biopen have a number of advantages. First the biopen is suitable for cost effective production using high volume manufacturing techniques and processes. For example the nozzle, handgrip and housings can be cheaply manufactured using high throughput techniques such as injection moulding using thermoplastic and/or thermosetting polymers. In particular the nozzle has been carefully designed to ensure consistent flow of materials whilst also being suitable for cheap and easy construction. Additionally the system features improved reliability through the use of drive system using a micro-controlled electronic (DC) jack screw. Additionally the microcontroller can be used to tightly control the temperature of the reagent containers to ensure consistent flow rates. The apparatus is an all-in-one unit, featuring an internal power supply, and is ergonomically designed to fit easily in the hand giving the user greater freedom of movement and ease of use. The apparatus is designed to allow easy and fool-proof reagent loading through the use of a hinged opening with different shaped loading bays to ensure that each reagent is loaded (and can only be loaded) into the correct bay. In one embodiment the biopen can be cost effectively manufactured as a single purpose disposable item which delivers a specific reagent at a constant rate without requiring any control by the user (other than on/off control). In other embodiments more sophisticated control system can be incorporated for the biopen allowing the user greater control over the extrusion of the reagents.

Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

It will be appreciated by those skilled in the art that the disclosure is not restricted in its use to the particular application or applications described. Neither is the present disclosure restricted in its preferred embodiment with regard to the particular elements and/or features described or depicted herein. It will be appreciated that the disclosure is not limited to the embodiment or embodiments disclosed, but is capable of numerous rearrangements, modifications and substitutions without departing from the scope as set forth and defined by the following claims

### Reference signs

- 1: Biopen
- 2: nozzle
- 3: handgrip
- 4: rear housing (reagent and batteries)
- 5: control module
- 6: power supply
- 7: drive train assembly
- 8: core reagent container (first container)
- 9: shell reagent container (second container)
- 10: frame
- 11: nozzle support
- 16: end stop
- 17: motor plate receiving surface
- 18: cavity for core reagent container
- 19: cavity for shell reagent container
- 20: nozzle assembly
- 21: manifold housing
- 22: tip
- 23: core aperture
- 24: UV light source
- 25: annular aperture
- 26: manifold (shell conduit)
- 27: retention rib
- 28: cavity to receive nozzle of first (core) reagent container
- 29: cavity to receive nozzle of second (shell) reagent container
- 31: handgrip housing
- 32: start button (cover)
- 33: start button actuator
- 34: aperture for start button
- 35: reagent container support arrangement
- 36: hinge
- 37: latch for cover
- 38: viewing aperture for first reagent container
- 39: viewing aperture for second reagent container
- 41: rear housing - upper section
- 42: rear housing - lower section
- 43: aperture in upper section for speed control knob
- 44: retention tabs
- 45: retention projections
- 46: internal supports
- 47: anti rotation slot
- 48: pistol grip
- 51: user interface
- 52: actuators
- 53: power button
- 54: battery indicator
- 55: speed indicator
- 56: setting control
- 57: purge core indicator
- 58: purge shell indicator
- 59: UV lamp on - curing mode
- 61: batteries
- 62: wiring
- 63: wiring
- 64: tape
- 65: wiring
- 71: Drive cradle
- 72: drive cap
- 73: jack screw
- 74: jack spur gear
- 75: stepper motor
- 76: anti rotation guide
- 77: reagent retention spring
- 78: stepper motor support
- 79: jack spur recess
- 81: Rear stop - rectangular; flange
- 82: cylindrical reagent container
- 83: reagent nozzle
- 84: first reagent piston
- 85: syringe plunger
- 91: rear stop - tapered
- 92: cylindrical reagent container
- 93: reagent nozzle
- 94: syringe plunger
- 100: triple concentric syringe
- 120: nozzle
- 121: outer tube
- 122: intermediate tube
- 123: core tube
- 124: cap manifold
- 125: seal, cap die plate
- 126: intermediate manifold
- 127: seal, alignment disk or intermediate die plate
- 128: nozzle base
- 131,132,133: syringes
- 141,142,143: plungers; reagent piston
- 151,152,153: jack screws
- 161,162,163: plunger actuators
- 171,172,173: stepper motors
- 222: conduit for LED cable
- 223: conduit
- 224: manifold plug
- 225: light pipe
- 226: conduit
- 228: conduit
- 229: conduit
- 231: rear shoulder
- 232: rear support projection
- 240: UV LED
- 242: light pipe
- 244: light pipe support
- 270: tip cap
- 271: cap portion of tip 21
- 272: rear portion of tip 21
- 273: cavity for hypodermic support tip
- 274: seal
- 275: front aperture for light pipe
- 276: seal recess
- 277: rear aperture for light pipe
- 278: hypodermic support tip
- 279: recess
- 711: anti rotation motor mount
- 712: retaining plate
- 713: drive shaft seals
- 714: motor cover
- 831: head grip housing
- 840: plunger actuator
- 841: rear housing part
- 847: anti rotation feature
- 848: actuator arm
- 872: motor retention plate
- 931: hand grip housing
- 941: rear housing part
- 948,949: actuator arm
- 981: syringe flange
- 986: distal location of plunger
- 992: syringe flange
- 996: proximal location of plunger

## Claims

1. A handheld 3D printing apparatus (1) for extruding multiple reagent compositions, the apparatus comprising:
a housing comprising:
a first reagent container support arrangement (35) which in use receives and supports a first reagent container (8) containing a cell supporting reagent;
a second reagent container support arrangement (35) which in use receives and supports a second reagent container (9) containing a light curable reagent;
a power supply (6);
an electric drive train arrangement (7) configured to drive a first reagent piston (84) into a distal end (81) of the first reagent container (8), and to drive a second reagent piston (94) into a distal end (91) of the second reagent container (9);
an electronic control circuit (5) to control the electric drive train (7) to control extrusion of the reagents from the first and second reagent containers (8,9);
a nozzle (2, 20, 120) connected at a distal end (3) to the housing and comprising a co-extrusion tip (22) comprising at least one aperture (23), and a first conduit for receiving the first reagent driven out of a proximal end of the first reagent container (8) and directing the first reagent out of the at least one aperture (23) in the tip (22), and a second conduit (26) for receiving the second reagent driven out of a proximal end of the second reagent container (9) and directing the second reagent out of the at least one aperture (23) in the tip (22).

2. The handheld 3D printing apparatus (1) as claimed in claim 1, wherein the nozzle (2, 20, 120) comprises a core aperture (23) and an annular aperture (25) in a coaxial arrangement, and a first conduit for receiving the first reagent driven out of a proximal end of the first reagent container (8) and directing the first reagent out of the core aperture (23) in the tip (22), and a second conduit (26) for receiving the second reagent driven out of a proximal end of the second reagent container (9) and directing the second reagent out of the annular aperture (25) in the tip (22).

3. The handheld 3D printing apparatus (1) as claimed in claim 1 further comprising:
i.) a light source (24) mounted on or in the device and controlled by the electronic control circuit (5) for curing the reagents either just prior or after extrusion from the tip (22); and/or
ii.) wherein the housing comprises a hinged portion (36) to allow the housing to be opened to receive and load the first and second reagent container (8, 9).

4. The handheld 3D printing apparatus (1) as claimed in claim 3 ii.), wherein the distal end of the first reagent container (8) comprises a flange (81) with a first profile shape, and the first reagent container support arrangement comprises a cut-out portion matching the first profile shape, and the distal end of the second reagent container (9) comprises a flange with a second profile shape different to the first profile shape, and the second reagent container support arrangement comprises a cut-out portion matching the second profile shape; and/or
wherein the housing comprises a handgrip (3) connected to a rear housing (4) comprising the power supply (6), electronic control circuit (5) and electric drive train arrangement (7), and the hinged portion (36) is formed in the handgrip (3) and the first and second reagent containers (8, 9) are loaded into handgrip (3); and/or
wherein the hinged portion (36) is located in a rear portion of the housing to allow an upper housing component (41) to flip through at least 90° up to 270° to provide internal access to allow loading of the first and second reagent containers (8, 9).

5. The handheld 3D printing apparatus (1) as claimed in any preceding claim further comprising a first aperture for viewing the first reagent in the first reagent container (8), and a second aperture for viewing the second reagent in the second reagent container (9).

6. The handheld 3D printing apparatus (1) as claimed in any preceding claim wherein the nozzle (2, 20, 120) is formed by plastic injection moulding with a first cavity (28) for receiving the proximal end (83) of the first reagent container (8), a second cavity (29) for receiving the proximal end (93) of the second reagent container (9), a tip (22) comprising a single tube leading to a manifold (26) with a first conduit (223, 228) to the first cavity (28) and a second conduit (229) to the second cavity (29), and the co-extrusion tip (22) is formed by inserting a core tube (23) into the single tube and through the manifold (26) and into the first conduit (223,228).

7. The hand.held 3D printing apparatus (1) as claimed in any preceding claim wherein the nozzle (2, 20, 120) is formed as a nozzle assembly (20, 120) of two plastic injection moulded parts comprising a cap portion (271) and nozzle portion (272), wherein optionally the nozzle assembly (20, 120) is sealed with an O-ring and fastened with one or more screws or wherein the nozzle assembly (20, 120) is sealed with an interference fit and fastened with a clip.

8. The handheld 3D printing apparatus (1) as claimed in any preceding claim further comprising a user interface (51) configured to allow a user to control the rate of extrusion of the reagents from the first and second reagent containers (8, 9), and select between at least two operating modes.

9. The handheld 3D printing apparatus (1) as claimed in any preceding claim wherein the upper portion of the housing (41) is transparent to allow viewing of the reagent containers (8, 9) and actuators (161, 162, 840), wherein optionally the frame (10) and upper portion of the housing (41) are embossed with lettering to locate the reagents in the correct position.

10. The handheld 3D printing apparatus (1) as claimed in claim 3 or any claim dependent upon claim 3 wherein the light source is mounted remote to the nozzle (2) and a light pipe directs light from the light source to the extruded material.

11. The handheld 3D printing apparatus (1) as claimed in any preceding claim where a rate of extrusion of the first and second reagents is independently controllable; or where a rate of extrusion of the first and second reagents is a mechanically fixed ratio.

12. The handheld 3D printing apparatus (1) as claimed in any preceding claim wherein the electric drive train arrangement (7) comprises:
a first and second stepper motor drive (75, 171, 172, 173);
a first and second jack screw (151, 152, 153);
a gear set (74) to transmit torque from each stepper motor (75, 171, 172, 173) to the respective jack screw (151, 152, 153).

13. The handheld 3D printing apparatus (1) as claimed in any preceding claim wherein the apparatus (1) is preloaded with batteries and provided in a sterile container as a disposable apparatus.

14. The handheld 3D printing apparatus (1) as claimed in any preceding claim further comprising one or more additional reagent container support arrangements which in use each receives and support an additional reagent container (131, 132, 133), and wherein the electric drive train arrangement (7) is further configured to drive each additional reagent piston (141, 142, 143) into a distal end of the additional reagent container (131, 132, 133), and the nozzle (2) is further configured to receive the additional reagent driven out of a proximal end of each additional reagent container (131, 132, 133) and co-extrude each additional reagent with the first and second reagents.

15. The handheld 3D printing apparatus (1) as claimed in claim 14, wherein the distal end of each additional reagent container comprises a flange with a unique profile shape, and the each reagent container support arrangement comprises a cut-out portion matching the unique profile shape; and/or
wherein the electric drive train arrangements (7) and reagent container support arrangements are configured to drive each additional reagent piston (141, 142, 143) into the distal end of each additional reagent container (131, 132, 133); and/or
wherein the nozzle (120) is configured to receive the additional reagent driven out of the proximal end of each additional reagent container (131, 132, 133) and co-extrude each additional reagent with the first and second reagents.

16. Use of the handheld 3D printing apparatus (1) as claimed in claims 1 to 15 for extruding radiation curable reagent compositions, wherein preferably the radiation curable reagent composition is additionally cured by using the handheld 3D printing apparatus (1).

17. The handheld 3D printing apparatus (1) as claimed in claim 1, wherein the nozzle is formed as a nozzle assembly and, wherein the nozzle assembly (2) is attachable to and removable from the housing.

18. The handheld 3D printing apparatus as claimed in claim 17, wherein the nozzle comprises configurations comprising side-by-side extrusion, different geometric shapes, nozzles of different length, nozzles of different diameter or different geometric ratios; and/or wherein the nozzle assembly (2) is formed by injection moulding processes.

19. The handheld 3D printing apparatus as claimed in claim 2 and claim 17, wherein the nozzle assembly contains at least 3 guide wires (187) and guide wire alignment disk (127), where the 3 guide wires are positioned within the annular aperture.

## Patentansprüche

1. Tragbare 3D-Druckvorrichtung (1) zum Extrudieren mehrerer Reagenzzusammensetzungen, wobei die Vorrichtung umfasst:
ein Gehäuse, das Folgendes umfasst:
eine erste Reagenzbehälterhalteanordnung (35), die bei Verwendung einen ersten Reagenzbehälter (8), der ein zelltragendes Reagenz enthält, aufnimmt und hält;
eine zweite Reagenzbehälterhalteanordnung (35), die bei Verwendung einen zweiten Reagenzbehälter (9), der ein lichthärtbares Reagenz enthält, aufnimmt und hält;
eine Stromversorgung (6);
eine elektrische Antriebsstranganordnung (7), die ausgestaltet ist, einen ersten Reagenzkolben (84) in ein distales Ende (81) des ersten Reagenzbehälters (8) zu treiben und einen zweiten Reagenzkolben (94) in ein distales Ende (91) des zweiten Reagenzbehälters (9) zu treiben;
einen elektronischen Steuerkreis (5), um den elektrischen Antriebsstrang (7) zu steuern, um die Extrusion der Reagenzien aus dem ersten und dem zweiten Reagenzbehälter (8,9) zu steuern;
eine Düse (2, 20, 120), die an einem distalen Ende (3) mit dem Gehäuse verbunden ist und eine Koextrusionsspitze (22), die mindestens eine Öffnung (23) umfasst, und einen ersten Kanal zum Aufnehmen des ersten Reagenz, das aus einem proximalen Ende des ersten Reagenzbehälters (8) getrieben wird, und zum Leiten des ersten Reagenz aus der mindestens einen Öffnung (23) in der Spitze (22), und einen zweiten Kanal (26) zum Aufnehmen des zweiten Reagenz, das aus einem proximalen Ende des zweiten Reagenzbehälters (9) getrieben wird, und zum Leiten des zweiten Reagenz aus der mindestens einen Öffnung (23) in der Spitze (22) umfasst.

2. Tragbare 3D-Druckvorrichtung (1) nach Anspruch 1, wobei die Düse (2, 20, 120) eine Kernöffnung (23) und eine ringförmige Öffnung (25) in einer koaxialen Anordnung und einen ersten Kanal zum Aufnehmen des ersten Reagenz, das aus einem proximalen Ende des ersten Reagenzbehälters (8) getrieben wird, und zum Leiten des ersten Reagenz aus der Kernöffnung (23) in der Spitze (22), und einen zweiten Kanal (26) zum Aufnehmen des zweiten Reagenz, das aus einem proximalen Ende des zweiten Reagenzbehälters (9) getrieben wird, und zum Leiten des zweiten Reagenz aus der ringförmigen Öffnung (25) in der Spitze (22) umfasst.

3. Tragbare 3D-Druckvorrichtung (1) nach Anspruch 1, ferner umfassend:
i.) eine Lichtquelle (24), die an oder in der Einheit befestigt ist und von dem elektronischen Steuerkreis (5) zum Härten der Reagenzien entweder unmittelbar vor oder nach der Extrusion aus der Spitze (22) gesteuert wird; und/oder ii.) wobei das Gehäuse einen Gelenkabschnitt (36) umfasst, um zu ermöglichen, dass das Gehäuse geöffnet wird, um den ersten und den zweiten Reagenzbehälter (8, 9) aufzunehmen und einzusetzen.

4. Tragbare 3D-Druckvorrichtung (1) nach Anspruch 3 ii.), wobei das distale Ende des ersten Reagenzbehälters (8) einen Flansch (81) mit einer ersten Profilform umfasst und die erste Reagenzbehälterhalteanordnung einen ausgeschnittenen Abschnitt umfasst, der zu der ersten Profilform passt, und das distale Ende des zweiten Reagenzbehälters (9) einen Flansch mit einer zweiten Profilform umfasst, die sich von der ersten Profilform unterscheidet, und die zweite Reagenzbehälterhalteanordnung einen ausgeschnittenen Abschnitt umfasst, der zu der zweiten Profilform passt; und/oder
wobei das Gehäuse einen Handgriff (3) umfasst, der mit einem hinteren Gehäuse (4) verbunden ist, das die Stromversorgung (6), den elektronischen Steuerkreis (5) und die elektrischer Antriebsstranganordnung (7) umfasst, und der Gelenkabschnitt (36) in dem Handgriff (3) ausgebildet ist und der erste und der zweite Reagenzbehälter (8, 9) in den Handgriff (3) eingesetzt sind; und/oder
wobei sich der Gelenkabschnitt (36) in einem hinteren Abschnitt des Gehäuses befindet, um zu ermöglichen, dass sich eine obere Gehäusekomponente (41) um mindestens 90 ° bis hin zu 270 ° dreht, um einen inneren Zugang bereitzustellen, um ein Einsetzen des ersten und des zweiten Reagenzbehälters (8, 9) zu ermöglichen.

5. Tragbare 3D-Druckvorrichtung (1) nach einem der vorhergehenden Ansprüche, ferner umfassend eine erste Öffnung zum Betrachten des ersten Reagenz in dem ersten Reagenzbehälter (8) und eine zweite Öffnung zum Betrachten des zweiten Reagenz in dem zweiten Reagenzbehälter (9).

6. Tragbare 3D-Druckvorrichtung (1) nach einem der vorhergehenden Ansprüche, wobei die Düse (2, 20, 120) durch Kunststoffspritzgießen mit einem ersten Hohlraum (28) zum Aufnehmen des proximalen Endes (83) des ersten Reagenzbehälters (8), einem zweiten Hohlraum (29) zum Aufnehmen des proximalen Endes (93) des zweiten Reagenzbehälters (9), einer Spitze (22), die ein einzelnes Röhrchen umfasst, das zu einem Verteiler (26) mit einem ersten Kanal (223, 228) zu dem ersten Hohlraum (28) und einem zweiten Kanal (229) zu dem zweiten Hohlraum (29) ausgebildet ist und die Koextrusionsspitze (22) durch Einbringen eines Kernröhrchens (23) in das einzelne Röhrchen und durch den Verteiler (26) und in den ersten Kanal (223, 228) ausgebildet ist.

7. Tragbare 3D-Druckvorrichtung (1) nach einem der vorhergehenden Ansprüche, wobei die Düse (2, 20, 120) als Düsenbaugruppe (20, 120) aus zwei spritzgegossenen Kunststoffteilen ausgebildet ist, die einen Kappenabschnitt (271) und einen Düsenabschnitt (272) umfassen, wobei die Düsenbaugruppe (20, 120) gegebenenfalls mit einem O-Ring abgedichtet und mit einer oder mehreren Schrauben fixiert ist oder wobei die Düsenbaugruppe (20, 120) mit einer Übermaßpassung abgedichtet und mit einer Klemme fixiert ist.

8. Tragbare 3D-Druckvorrichtung (1) nach einem der vorhergehenden Ansprüche, ferner umfassend eine Benutzeroberfläche (51), die dazu ausgestaltet ist, es zu ermöglichen, dass ein Benutzer die Geschwindigkeit der Extrusion der Reagenzien aus dem ersten und dem zweiten Reagenzbehälter (8, 9) steuert und zwischen mindestens zwei Betriebsmodi auswählt.

9. Tragbare 3D-Druckvorrichtung (1) nach einem der vorhergehenden Ansprüche, wobei der obere Abschnitt des Gehäuses (41) transparent ist, um ein Betrachten des Reagenzbehälters (8, 9) und der Betätigungselemente (161, 162, 840) zu ermöglichen, wobei in den Rahmen (10) und den oberen Abschnitt des Gehäuses (41) gegebenenfalls eine Beschriftung eingeprägt ist, um die Reagenzien in der richtigen Position anzuordnen.

10. Tragbare 3D-Druckvorrichtung (1) nach Anspruch 3 oder einem der von Anspruch 3 abhängigen Ansprüche, wobei die Lichtquelle von der Düse (2) entfernt befestigt ist und eine Lichtröhre Licht aus der Lichtquelle zu dem extrudierten Material leitet.

11. Tragbare 3D-Druckvorrichtung (1) nach einem der vorhergehenden Ansprüche, wobei eine Geschwindigkeit der Extrusion des ersten und des zweiten Reagenz unabhängig steuerbar ist; oder wobei eine Geschwindigkeit der Extrusion des ersten und des zweiten Reagenz ein mechanisch festgelegtes Verhältnis ist.

12. Tragbare 3D-Druckvorrichtung (1) nach einem der vorhergehenden Ansprüche, wobei die elektrische Antriebsstranganordnung (7) Folgendes umfasst:
einen ersten und einen zweiten Schrittmotorantrieb (75, 171, 172, 173);
eine erste und eine zweite Schraubspindel (151, 152, 153);
einen Zahnradsatz (74), um Drehmoment von jedem Schrittmotor (75, 171, 172, 173) zu der jeweiligen Schraubspindel (151, 152, 153) zu übertragen.

13. Tragbare 3D-Druckvorrichtung (1) nach einem der vorhergehenden Ansprüche, wobei die Vorrichtung (1) mit Batterien vorbestückt und in einem sterilen Behälter als Einwegvorrichtung bereitgestellt ist.

14. Tragbare 3D-Druckvorrichtung (1) nach einem der vorstehenden Ansprüche, ferner umfassend ein oder mehrere zusätzliche Reagenzbehälterhalteanordnungen, die bei Verwendung jeweils einen zusätzlichen Reagenzbehälter (131, 132, 133) aufnehmen und halten, und wobei die elektrische Antriebsstranganordnung (7) ferner ausgestaltet ist, jeden zusätzlichen Reagenzkolben (141, 142, 143) in ein distales Ende des zusätzlichen Reagenzbehälters (131, 132, 133) zu treiben, und die Düse (2) ferner ausgestaltet ist, das zusätzliche Reagenz, das aus einem proximalen Ende jedes zusätzlichen Reagenzbehälters (131, 132, 133) getrieben wird, aufzunehmen und jedes zusätzliche Reagenz mit dem ersten und dem zweiten Reagenz zu koextrudieren.

15. Tragbare 3D-Druckvorrichtung (1) nach Anspruch 14, wobei das distale Ende jedes zusätzlichen Reagenzbehälters einen Flansch mit einer einzigartigen Profilform umfasst und jede Reagenzbehälterhalteanordnung einen ausgeschnittenen Abschnitt umfasst, der zu der einzigartigen Profilform passt; und/oder
wobei die elektrischen Antriebsstranganordnungen (7) und Reagenzbehälterhalteanordnungen ausgestaltet sind, jeden zusätzlichen Reagenzkolben (141, 142, 143) in das distale Ende jedes zusätzlichen Reagenzbehälters (131, 132, 133) zu treiben; und/oder
wobei die Düse (120) dazu ausgestaltet ist, das zusätzliche Reagenz, das aus dem proximalen Ende jedes zusätzlichen Reagenzbehälters (131, 132, 133) getrieben wird, aufzunehmen und jedes zusätzliche Reagenz mit dem ersten und dem zweiten Reagenz zu koextrudieren.

16. Verwendung der tragbaren 3D-Druckvorrichtung (1) nach einem der Ansprüche 1 bis 15 zum Extrudieren strahlungshärtbarer Reagenzzusammensetzungen, wobei vorzugsweise die strahlungshärtbare Reagenzzusammensetzung zusätzlich unter Verwendung der tragbaren 3D-Druckvorrichtung (1) gehärtet wird.

17. Tragbare 3D-Druckvorrichtung (1) nach Anspruch 1, wobei die Düse als Düsenbaugruppe ausgebildet ist und wobei die Düsenbaugruppe (2) an dem Gehäuse anbringbar und davon entfernbar ist.

18. Tragbare 3D-Druckvorrichtung nach Anspruch 17, wobei die Düse Ausgestaltungen umfasst, die nebeneinanderlaufende Extrusion, unterschiedliche geometrische Formen, Düsen mit unterschiedlicher Länge, Düsen mit unterschiedlichem Durchmesser oder unterschiedlichen geometrischen Verhältnissen umfassen; und/oder wobei die Düsenbaugruppe (2) durch Spritzgießverfahren ausgebildet ist.

19. Tragbare 3D-Druckvorrichtung nach Anspruch 2 und Anspruch 17, wobei die Düsenbaugruppe mindestens 3 Führungsdrähte (187) und Führungsdrahtausrichtungsscheibe (127) umfasst, wobei die 3 Führungsdrähte innerhalb der ringförmigen Öffnung angeordnet sind.

## Revendications

1. Appareil d'impression 3D portatif (1) pour extruder des compositions de réactifs multiples, l'appareil comprenant :
un boîtier comprenant :
un premier dispositif de support de contenant de réactifs (35) qui, en utilisation, accueille et supporte un premier contenant de réactifs (8) contenant un réactif de support cellulaire ;
un second dispositif de support de contenant de réactifs (35) qui, en utilisation, accueille et supporte un second contenant de réactifs (9) contenant un réactif photodurcissable ;
une alimentation électrique (6) ;
un dispositif de transmission électrique (7) configuré pour entraîner un premier piston de réactifs (84) dans une extrémité distale (81) du premier contenant de réactifs (8), et pour entraîner un second piston de réactifs (94) dans une extrémité distale (91) du second contenant de réactifs (9) ;
un circuit de commande électronique (5) pour commander la transmission électrique (7) afin de commander l'extrusion des réactifs à partir des premier et second contenants de réactifs (8, 9) ;
une buse (2, 20, 120) reliée à une extrémité distale (3) au boîtier et comprenant une pointe de coextrusion (22) comprenant au moins une ouverture (23), et un premier conduit pour accueillir le premier réactif entraîné hors d'une extrémité proximale du premier contenant de réactifs (8) et diriger le premier réactif hors de ladite au moins une ouverture (23) dans la pointe (22), et un second conduit (26) pour accueillir le second réactif entraîné hors d'une extrémité proximale du second contenant de réactifs (9) et diriger le second réactif hors de ladite au moins une ouverture (23) dans la pointe (22).

2. Appareil d'impression 3D portatif (1) selon la revendication 1, où la buse (2, 20, 120) comprend une ouverture centrale (23) et une ouverture annulaire (25) dans une disposition coaxiale, et un premier conduit pour accueillir le premier réactif entraîné hors d'une extrémité proximale du premier contenant de réactifs (8) et diriger le premier réactif hors de l'ouverture centrale (23) dans la pointe (22), et un second conduit (26) pour accueillir le second réactif entraîné hors d'une extrémité proximale du second contenant de réactifs (9) et diriger le second réactif hors de l'ouverture annulaire (25) dans la pointe (22).

3. Appareil d'impression 3D portatif (1) selon la revendication 1 comprenant en outre :
i.) une source de lumière (24) montée sur ou dans le dispositif et commandée par le circuit de commande électronique (5) pour durcir les réactifs juste avant ou après leur extrusion de la pointe (22) ; et/ou
ii.) où le boîtier comprend une partie articulée (36) pour permettre au boîtier d'être ouvert pour accueillir et charger le premier et le second contenants de réactifs (8, 9).

4. Appareil d'impression 3D portatif (1) selon la revendication 3 ii.), où l'extrémité distale du premier contenant de réactifs (8) comprend une bride (81) avec une première forme de profil, et le dispositif de support du premier contenant de réactifs comprend une partie découpée correspondant à la première forme de profil, et l'extrémité distale du second contenant de réactifs (9) comprend une bride avec une seconde forme de profil différente de la première forme de profil, et le dispositif de support du second contenant de réactifs comprend une partie découpée correspondant à la seconde forme de profil ; et/ou
où le boîtier comprend une poignée (3) reliée à un boîtier arrière (4) comprenant l'alimentation électrique (6), le circuit de commande électronique (5) et le dispositif de transmission électrique (7), et la partie articulée (36) est formée dans la poignée (3) et les premier et second contenants de réactifs (8, 9) sont chargés dans la poignée (3) ; et/ou
où la partie articulée (36) est située dans une partie arrière du boîtier pour permettre à un composant supérieur du boîtier (41) de basculer d'au moins 90° jusqu'à 270° pour fournir un accès interne afin de permettre le chargement des premier et second contenants de réactifs (8, 9).

5. Appareil d'impression 3D portatif (1) selon l'une quelconque des revendications précédentes, comprenant en outre une première ouverture pour visualiser le premier réactif dans le premier contenant de réactifs (8), et une seconde ouverture pour visualiser le second réactif dans le second contenant de réactifs (9).

6. Appareil d'impression 3D portatif (1) selon l'une quelconque des revendications précédentes, où la buse (2, 20, 120) est formée par moulage par injection plastique avec une première cavité (28) pour accueillir l'extrémité proximale (83) du premier contenant de réactifs (8), une seconde cavité (29) pour accueillir l'extrémité proximale (93) du second contenant de réactifs (9), une pointe (22) comprenant un tube unique menant à un collecteur (26) avec un premier conduit (223, 228) vers la première cavité (28) et un second conduit (229) vers la seconde cavité (29), et la pointe de coextrusion (22) est formée en insérant un tube central (23) dans le tube unique et à travers le collecteur (26) et dans le premier conduit (223, 228).

7. Appareil d'impression 3D portatif (1) selon l'une quelconque des revendications précédentes, où la buse (2, 20, 120) est formée en tant qu'ensemble de buse (20, 120) de deux pièces moulées par injection plastique comprenant une partie de capuchon (271) et une partie de buse (272), où, de manière facultative, l'ensemble de buse (20, 120) est scellé avec un joint torique et fixé avec une ou plusieurs vis ou où l'ensemble de buse (20, 120) est scellé avec un ajustement serré et fixé avec un clip.

8. Appareil d'impression 3D portatif (1) selon l'une quelconque des revendications précédentes, comprenant en outre une interface utilisateur (51) configurée pour permettre à un utilisateur de contrôler la vitesse d'extrusion des réactifs à partir des premier et second contenants de réactifs (8, 9), et de choisir entre au moins deux modes de fonctionnement.

9. Appareil d'impression 3D portatif (1) selon l'une quelconque des revendications précédentes, où la partie supérieure du boîtier (41) est transparente pour permettre de visualiser les contenants de réactifs (8, 9) et les actionneurs (161, 162, 840), où, de manière facultative, le cadre (10) et la partie supérieure du boîtier (41) sont estampés avec un lettrage pour placer les réactifs dans la bonne position.

10. Appareil d'impression 3D portatif (1) selon la revendication 3 ou l'une quelconque des revendications dépendant de la revendication 3, où la source de lumière est montée à distance de la buse (2) et un conduit de lumière dirige la lumière de la source de lumière vers le matériau extrudé.

11. Appareil d'impression 3D portatif (1) selon l'une quelconque des revendications précédentes, où une vitesse d'extrusion des premier et second réactifs est contrôlable indépendamment ; ou où une vitesse d'extrusion des premier et second réactifs est un rapport mécaniquement fixe.

12. Appareil d'impression 3D portatif (1) selon l'une quelconque des revendications précédentes, où le dispositif de transmission électrique (7) comprend :
un premier et un second entraînement moteur pas à pas (75, 171, 172, 173) ;
un premier et un second vérin à vis (151, 152, 153) ;
un jeu d'engrenages (74) pour transmettre le couple de chaque moteur pas à pas (75, 171, 172, 173) au vérin à vis respectif (151, 152, 153).

13. Appareil d'impression 3D portatif (1) selon l'une quelconque des revendications précédentes, où l'appareil (1) est préchargé avec des piles et fourni dans un contenant stérile comme un dispositif jetable.

14. Appareil d'impression 3D portatif (1) selon l'une quelconque des revendications précédentes, comprenant en outre un ou plusieurs dispositifs de support de contenants de réactifs supplémentaire qui, en utilisation, accueillent et supportent chacun un contenant de réactifs supplémentaire (131, 132, 133), et où le dispositif de transmission électrique (7) est en outre configuré pour entraîner chaque piston de réactifs supplémentaire (141, 142, 143) dans une extrémité distale du contenant de réactifs supplémentaire (131, 132, 133), et la buse (2) est en outre configurée pour accueillir le réactif supplémentaire entraîné hors d'une extrémité proximale de chaque contenant de réactifs supplémentaire (131, 132, 133) et coextruder chaque réactif supplémentaire avec les premier et second réactifs.

15. Appareil d'impression 3D portatif (1) selon la revendication 14, où l'extrémité distale de chaque contenant de réactifs supplémentaire comprend une bride avec une forme de profil unique, et le dispositif de support de chaque contenant de réactifs comprend une partie découpée correspondant à la forme de profil unique ; et/ou
où les dispositifs de transmission électrique (7) et les dispositifs de support de contenants de réactifs sont configurés pour entraîner chaque piston de réactifs supplémentaire (141, 142, 143) dans l'extrémité distale de chaque contenant de réactifs supplémentaire (131, 132, 133) ; et/ou
où la buse (120) est configurée pour accueillir le réactif supplémentaire entraîné hors de l'extrémité proximale de chaque contenant de réactifs supplémentaire (131, 132, 133) et coextruder chaque réactif supplémentaire avec les premier et second réactifs.

16. Utilisation de l'appareil d'impression 3D portatif (1) selon les revendications 1 à 15 pour extruder des compositions de réactifs durcissables par rayonnement, où de préférence la composition de réactifs durcissables par rayonnement est en outre durcie en utilisant l'appareil d'impression 3D portatif (1).

17. Appareil d'impression 3D portatif (1) selon la revendication 1, où la buse est formée comme un ensemble de buse et, où l'ensemble de buse (2) peut être fixé et retiré du boîtier.

18. Appareil d'impression 3D portatif (1) selon la revendication 17, où la buse comprend des configurations comprenant une extrusion côte à côte, des formes géométriques différentes, des buses de longueur différente, des buses de diamètre différent ou des rapports géométriques différents ; et/ou où l'ensemble de buse (2) est formé par des procédés de moulage par injection.

19. Appareil d'impression 3D portatif (1) selon les revendications 2 et 17, où l'ensemble de buses contient au moins 3 fils de guidage (187) et un disque d'alignement de fils de guidage (127), où les 3 fils de guidage sont positionnés dans l'ouverture annulaire.
